(19)

**Europäisches Patentamt**
**European Patent Office**
**Office européen des brevets**

(11) **EP 3 388 951 B1**

(12) **EUROPEAN PATENT SPECIFICATION**

(45) Date of publication and mention
of the grant of the patent:
**22.11.2023 Bulletin 2023/47**

(51) International Patent Classification (IPC):
**G01C 22/00** (2006.01)    **G06F 17/10** (2006.01)
**G01C 21/16** (2006.01)    **G01C 21/20** (2006.01)

(21) Application number: **17305447.9**

(52) Cooperative Patent Classification (CPC):
**G06F 17/10; G01C 21/165; G01C 21/20;**
**G01C 22/006**

(22) Date of filing: **14.04.2017**

(54) **A DEVICE AND METHOD FOR MORE ACCURATELY CHARACTERIZING THE MOVEMENTS OF A PEDESTRIAN**

VORRICHTUNG UND VERFAHREN ZUR PRÄZISEREN CHARAKTERISIERUNG DER BEWEGUNGEN EINES FUSSGÄNGERS

DISPOSITIF ET PROCÉDÉ DE CARACTÉRISATION PLUS PRÉCISE DES MOUVEMENTS D'UN PIÉTON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.10.2018 Bulletin 2018/42**

(73) Proprietor: **Centre National d'Etudes Spatiales 75039 Paris Cedex 01 (FR)**

(72) Inventor: **MARMET, François-Xavier 31600 MURET (FR)**

(74) Representative: **Germain Maureau 12, rue Boileau 69006 Lyon (FR)**

(56) References cited:
**US-A1- 2012 136 573**

- **SHAGHAYEGH ZIHAJEHZADEH ET AL: "Integration of MEMS Inertial and Pressure Sensors for Vertical Trajectory Determination", IEEE TRANSACTIONS ON INSTRUMENTATION AND MEASUREMENT., vol. 64, no. 3, March 2015 (2015-03), pages 804-814, XP055251295, US ISSN: 0018-9456, DOI: 10.1109/TIM.2014.2359813**
- **MINGRONG REN ET AL: "A Novel Pedestrian Navigation Algorithm for a Foot-Mounted Inertial-Sensor-Based System", SENSORS, vol. 16, no. 2, 21 January 2016 (2016-01-21), page 139, XP055422767, DOI: 10.3390/s16010139**

- **Anonymous: "Naismith's rule", Wikipedia, 30 March 2017 (2017-03-30), pages 1-8, XP055423016, Retrieved from the Internet: URL:https://en.wikipedia.org/w/index.php?title=Naismith%27s_rule&oldid=772941680 [retrieved on 2017-11-08]**
- **Anonymous: "Tobler's hiking function", Wikipedia, 20 February 2017 (2017-02-20), pages 1-4, XP055423018, Retrieved from the Internet: URL:https://en.wikipedia.org/w/index.php?title=Tobler%27s_hiking_function&oldid=766415196 [retrieved on 2017-11-08]**
- **YUNKI KIM ET AL: "Height estimation scheme of low-cost pedestrian dead-reckoning system using Kalman Filter and walk condition estimation algorithm", 2013 IEEE/ASME INTERNATIONAL CONFERENCE ON ADVANCED INTELLIGENT MECHATRONICS, July 2013 (2013-07), pages 1492-1497, XP055424184, ISSN: 2159-6247, DOI: 10.1109/AIM.2013.6584306 ISBN: 978-1-4673-5319-9**
- **MAKOTO TANIGAWA ET AL: "Drift-free dynamic height sensor using MEMS IMU aided by MEMS pressure sensor", (WPNC '08) 5TH, IEEE, 27 March 2008 (2008-03-27), pages 191-196, XP031247847, ISBN: 978-1-4244-1798-8**

EP 3 388 951 B1

**(Cont. next page)**

- BOLANAKIS DIMOSTHENIS E ET AL: "Temperature influence on differential barometric altitude measurements", 2015 IEEE 8TH INTERNATIONAL CONFERENCE ON INTELLIGENT DATA ACQUISITION AND ADVANCED COMPUTING SYSTEMS: TECHNOLOGY AND APPLICATIONS (IDAACS), IEEE, vol. 1, 24 September 2015 (2015-09-24), pages 120-124, XP032820725, DOI: 10.1109/IDAACS.2015.7340711 ISBN: 978-1-4673-8359-2 [retrieved on 2015-11-30]
- Cnes ET AL: "CNES10 : Kalman filter and predictive model for accurate measurement of human activities", , 17 February 2017 (2017-02-17), pages 1-4, XP055808168, Retrieved from the Internet: URL:https://actinspace.s3-eu-west-1.amazon aws.com/documents/challenges_doc_details_k alman-filter-and-predictive-model-for-accu rate-measurement-of-human-activities_4Gbdg 5BqS3AgJvrma.pdf [retrieved on 2021-05-27]

**Description**

FIELD OF THE INVENTION

The present invention relates to the field of motion tracking. More specifically, it relates to a determination of the movement of a pedestrian that remains accurate, even in changing environments, especially if the pedestrian walks on a trajectory with different slopes.

BACKGROUND PRIOR ART

Motion tracking may relate to the monitoring of characteristics of the movement of a pedestrian. For example, motion tracking may be used to calculate a trajectory of a pedestrian, or to calculate a speed of a pedestrian. Motion tracking is also used in a number of applications related to the movement of a pedestrian, such as monitoring a speed of a pedestrian practicing sport, computing/monitoring calories burned, or any application that relies on observing movements of a pedestrian.

Motion tracking functions can be implemented in a number of different devices. These devices encompass specific devices, such as smart watches or smart wristbands, IoT devices (built on a shirt as example) or programmable devices or the like (for example, smartphones) with a motion tracking application. Motion tracking functions usually use motion signals from motion sensors in one or more devices worn by the pedestrian. Such motion sensors may be for example accelerometers, gyros and/or magnetometers, and may be packaged in many different formats. For example, they may be packaged as MEMS (Micro ElectroMechanical Systems) sensors.

A pedometer is a sensor that counts a number of steps, or a step frequency, of a pedestrian. A pedometer may be implemented in a software form, by analyzing signals from various sensors. For example, software can be configured to analyze signals from an accelerometer, and detect the pace or step frequency of the pedestrian by analyzing the accelerometer signals. This is possible, because each step of the pedestrian can be characterized by successive highs and lows in the acceleration signals, following the movements of the hips, wrist or chest of the pedestrian.

Pedometer measurements can be used to detect speed and/or movement of a pedestrian. For example, European patent application published under number EP1253404 discloses a method for pedestrian trajectory tracking (so-called "Pedestrian Dead Reckoning ") that uses the horizontal acceleration of the pedestrian to characterize the steps of the pedestrian, and, using the steps, the displacements of the pedestrian.

Such techniques for estimating a distance crossed based on a step count, or step frequency, require knowledge of a stride length of the pedestrian for converting a step count into distance, or a step frequency into speed. Some basic methods or devices rely on standard stride lengths. However such standard stride lengths provide very coarse approximations of the distance crossed, or speed of the pedestrian. Indeed, different pedestrians may have very different stride lengths for a given stride frequency, and stride length changes when stride frequency changes, not to mention that environmental factors such as ground slope also affect stride length.

These techniques allow an accurate tracking of a movement of a pedestrian using a pedometer when a pedestrian is moving on flat ground. However, these techniques do not properly handle the possibility for a pedestrian to move on a path with a slope, for example when he/she is performing a hike. This decreases the accuracy of stride length and pace determination, because the slope of the path of the pedestrian modifies both the stride length, and the pace of the pedestrian. The above-mentioned techniques thus fail to accurately and reliably take into account the effect of the slope on the movement of the pedestrian. This issue more generally arises, in all applications that monitor the movements of a pedestrian, when using measurements of any physical field related to the speed of the pedestrian.

There is therefore the need for a device and method to accurately monitor movements of a user, whatever the current slope of the path where the pedestrian is moving and the pace of the pedestrian.

SUMMARY OF THE INVENTION

To this effect, the invention discloses a device comprising: a communication link to a first sensor, said first sensor being located within a housing carriable by a pedestrian, configured to obtain measured values of a first set of data representative of a speed of the pedestrian, or a derivative thereof; a communication link to a second sensor, said second sensor being located within a housing carriable by the pedestrian, configured to obtain measured values of a second set of data representative of an altitude of the pedestrian, or a derivative thereof; a processing logic configured to calculate estimated values of a state vector of the pedestrian comprising: a first element representative of the speed of the pedestrian, or a derivative thereof; a second element representative of the altitude of the pedestrian, or a derivative thereof; and a path slope; said processing logic being configured to calculate estimated values of the state vector based on said measured values of the first set of data said measured values of the second set of data, and a model of the pedestrian motion comprising a relationship between at least a speed of the pedestrian or a derivative thereof and a path slope or a derivative thereof.

Advantageously, the processing logic is configured to perform successive steps of calculation of the state vector, each step (k) comprising: calculating predicted values of the state vector at step (k), based on predicted values at the output of one or more preceding steps (k-1, k-2...), and said model of the pedestrian; modifying values of the state vector at step (k), in order to minimize a difference between observed values of the first and second elements, based on said first and second sets of data, and predicted values of the first and second element at step (k).

Advantageously, the first set of data is associated with a first uncertainty value, based on a measurement precision of the first sensor ; the second set of data is associated with a second uncertainty value, based on a measurement precision of the second sensor ; the processing logic is configured to modify values of the state vector at step (k), in order to minimize the difference between observed and predicted values of the first and second elements at step (k) using said first uncertainty value, and said second uncertainty value.

Advantageously, the processing logic comprises one or more of a Kalman filter, or extended Kalman filter, an unscented Kalman filter, a central difference Kalman filter, or a particle filter.

Advantageously, the processing logic is configured to detect a change of the pace of the pedestrian.

Advantageously, the processing logic is configured to detect said change of the pace of the pedestrian, based on a comparison between a speed of the pedestrian in the state vector, and a reference speed of the pedestrian.

Advantageously, the processing logic is configured, at each time step, to: determine, if the user is performing one of walking or running ; if the user is neither walking nor running, set the value of the first element representative of the speed of the pedestrian to a value representative of null speed ; if the user is walking or running, and a path change is detected, calculating a predicted value of the first element at time step (k) based on values of the first element at one or more preceding steps (k-1, k-2, ...), and adjusting said relationship between the speed of the pedestrian and the path slope based on the values of said first element, and said path slope, at the output of one or more of step k, and successive steps (k+1, k+2, ...) ; if the user is walking or running, and no path change is detected, calculating a predicted value of the first element representative of the speed of the pedestrian at time step (k) based on values of path slope at one or more preceding steps (k-1, k-2, ...), and said relationship between the speed of the pedestrian and the path slope.

Advantageously, said relationship between a speed the pedestrian and a path slope is one of a Tobler's hiking function or a Naismith's rule with or without Tranter, Aitken or Langmuir corrections.

Advantageously, said one of a Tobler's hiking function or a Naismith's rule with or without Tranter, Aitken or Langmuir corrections is parameterized using one or more of an age of the pedestrian, a gender of the pedestrian, an height of the pedestrian, and a weight or a body mass index of the pedestrian.

Advantageously, said Tobler's hiking function or a Naismith's rule with or without Tranter, Aitken or Langmuir corrections is parameterized by a pace of the pedestrian.

Advantageously, the first sensor is a pedometer, and the first set of data is one of a step count or a step frequency.

Advantageously, the processing logic is configured to continuously estimate components of a position and/or a speed of the pedestrian.

Advantageously, the processing logic is configured to: detect if a GNSS application is ON or OFF ; receive a position of the pedestrian from the GNSS application, whenever said GNSS application is ON ; store a last position of the user received from the GNSS application, when said application is turned OFF ; estimate, whenever said GNSS application is OFF, a distance crossed by the user ; when said GNSS application is turned ON, calculate a start position of the user, using said last position of the user, and said distance crossed by the user.

Advantageously, the device is configured to output one or more of a step count of the pedestrian, a speed of the pedestrian, a distance crossed by the pedestrian, an uphill/downhill elevation and a path slope.

The invention also discloses a method comprising: using a first sensor, said first sensor being located within a housing carriable by a pedestrian, to obtain measured values of a first set of data representative of a speed of the pedestrian, or a derivative thereof; using a second sensor, said second sensor being located within a housing carriable by the pedestrian, to obtain measured values of a second set of data representative of an altitude of the pedestrian, or a derivative thereof ; calculating estimated values of a state vector of the pedestrian comprising : a first element representative of the speed of the pedestrian, or a derivative thereof ; a second element representative of the altitude of the pedestrian, or a derivative thereof ; and a path slope ; wherein calculating estimated values of a state vector of the pedestrian is based on said measured values of the first set of data, said measured values of the second set of data, and a model of the pedestrian motion comprising a relationship between at least a speed of the pedestrian or a derivative thereof and a path slope or a derivative thereof.

The invention also discloses a computer program product, stored on a non-transient computer readable medium, comprising computer code instructions configured to : obtain measured values from a first sensor, said first sensor being located within a housing carriable by a pedestrian, to obtain measured values of a first set of data representative of a speed of the pedestrian, or a derivative thereof ; obtain measured values from a second sensor, said second sensor being located within a housing carriable by a pedestrian, to obtain measured values of a second set of data representative of an altitude of the pedestrian, or a derivative thereof ; calculate estimated values of a state vector of the pedestrian comprising : a first element representative of the speed of the pedestrian, or a derivative thereof ; a second element representative of the altitude of the pedestrian, or a derivative thereof ; and a path slope ; wherein said computed code instructions are configured to calculate estimated values of a state vector of the pedestrian based on said measured values of the first set of data, said measured values of the second set of data, and a model of the pedestrian motion comprising at least a relationship between a speed of the pedestrian or a derivative thereof and a path slope or a derivative thereof.

The invention also discloses a state vector for defining the movement of a pedestrian, comprising: a first element representative of a speed of a pedestrian, or a derivative thereof ; a second element representative of an altitude of the pedestrian, or a derivative thereof ; a path slope; wherein said elements are derived from : measured values of a first set of data representative of the speed of the pedestrian, or a derivative thereof, said measured values of the first set of data being obtained by a first sensor located within a housing carriable by a pedestrian ; measured values of a second set of data representative of an altitude of the pedestrian, or a derivative thereof, said measured values of the second set of data being obtained by a second sensor located within a housing carriable by the user; and a model of the pedestrian motion comprising at least a relationship between a speed of the pedestrian or a derivative thereof and a path slope or a derivative thereof.

In an aspect, the invention relates to the characterization of the movements of a pedestrian. A number of applications, for example hike, require a good estimation of instantaneous speed-related and altitude-related sets of data. Speed-related and altitude-related sets of data can be measured respectively by speed-related and altitude-related sensors. However measures from such sensor are usually affected by noise, which reduces the precision of measurements. The invention allows obtaining precise estimations of speed-related and altitude-related sets of data, by defining a state vector of the pedestrian comprising speed-related and altitude-related sets of data, as well as a path slope. Estimations of the values of the state vector are obtained, over successive path steps, by measurements from speed-related and altitude-related sensors, and a model of the pedestrian comprising a relationship between a speed of the pedestrian and a path slope. Although the path slope is not directly measured, it advantageously allows, in combination with the model of the pedestrian motion, to perform an effective and accurate data fusion between speed-related and altitude-related sets of data.

Some advantages of the invention are listed below but it appears in an obvious manner for a person skilled in the art that other advantages are involved by such invention.

The invention implies a more precise monitoring of the movements of a pedestrian.

The invention allows a precise monitoring of the movements of a pedestrian, even using sensors having a limited precision.

The invention advantageously allows a precise monitoring of the movements of a pedestrian, even when no Radio Frequency-based (e.g no GNSS or other RadioFrequency measurements allowing calculating a position) measurements are available.

The invention allows a precise determination of pedestrian stride and/or pace, taking into account the slope of the path that the pedestrian follows.

The invention is applicable to any kind of sensor providing measurements in relation with the speed of the user, or variation thereof.

The invention is applicable to any kind of sensor providing measurements in relation with the altitude of the user, or variation thereof.

The invention can be tailored to physical characteristics of a pedestrian.

The invention can be implemented using MEMS.

BRIEF DESCRIPTION OF THE DRAWINGS

The invention will be better understood and its various features and advantages will emerge from the following description of a number of exemplary embodiments, showed for illustration purposes only, and its appended figures in which:

- Figure 1a and 1b display two examples of devices suitable for adaptation to embody the invention;
- Figure 2 displays a pedestrian performing hiking and wearing a device according to the invention;
- Figures 3a and 3b display two examples of a functional architecture of a device in two embodiments of the invention;
- Figure 4 displays two examples of functions for establishing a relationship between a speed of the user and a path slope in two embodiments of the invention;
- Figure 5 displays an example of an extended Kalman filtering in a number of embodiments of the invention;
- Figure 6 displays an example a logic of selection and execution of Kalman filters in a number of embodiments of the invention;
- Figure 7 displays an example of pace change detection in a number of embodiments of the invention;

- Figure 8 displays a flow chart of an example of a method of the invention.

DETAILED DESCRIPTION OF THE INVENTION

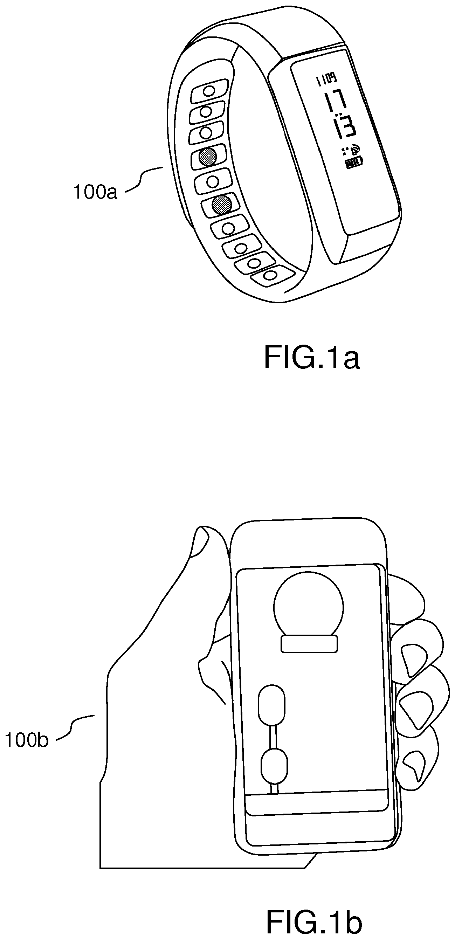

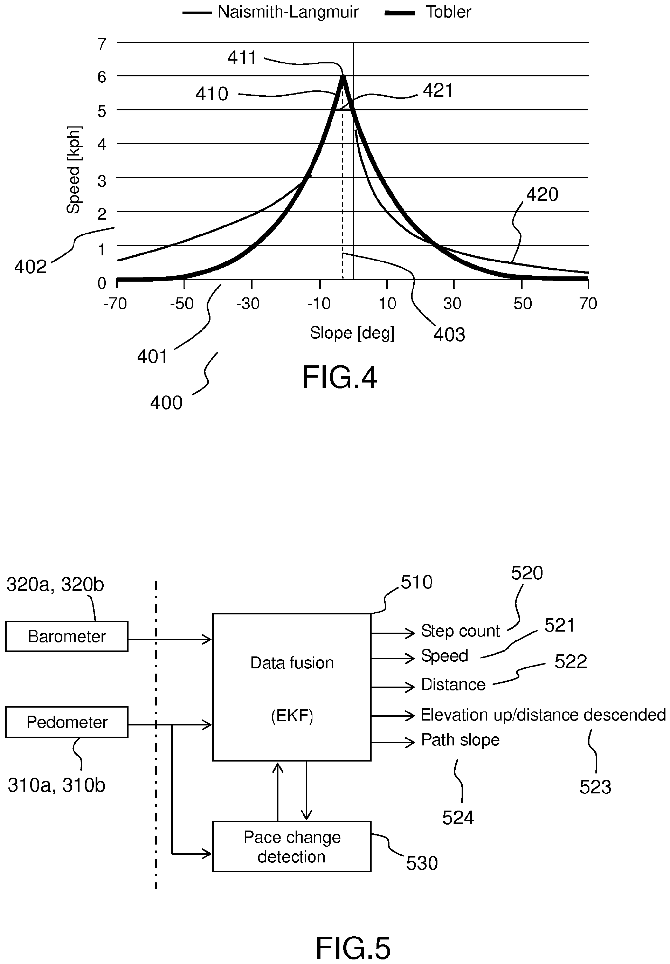

Figures 1a and 1b display two examples of devices suitable for adaptation to embody the invention.
Figure 1a displays a first example of a device 100a suitable for adaptation to embody the invention. The device 100a is a watch with processing capabilities and thus belongs to the devices commonly called "Smart watches". The device 100a is configured to display the current time to a pedestrian wearing the watch, as well as information relative to the movement of the pedestrian, such as the instantaneous speed of the pedestrian, or the current pace of the pedestrian. The device 100a is designed to be attached on the wrist of the pedestrian. The device 100a can use a connection to external devices. For example, the device 100a can be configured to be connected to a smartphone, or connect to a remote server.
Figure 1b displays a second example of a device 100b suitable for adaptation to embody the invention. The device 100b is a smartphone. The device 100b can be configured to perform any function usually performed by a smartphone, such as calling, installing applications, browsing websites, etc... The device 100b can be equipped with any connection which is adaptable to a smartphone, such as a Wi-Fi connection, Bluetooth connection, 3G, 4G and/or 5G connection, etc...
The device 100a or 100b can be used to monitor the activity of a pedestrian who is wearing the device, for example when the pedestrian is performing sport. Monitoring the activity of the pedestrian can be performed for example by displaying instantaneously to the pedestrian information relative to the movement of the pedestrian, or displaying average values for a whole sport session. For example, the device 100a or 100b can be configured to display an average speed, pace, and/or heart rate of the pedestrian, for instance during a sport session. It may also be configured to display information relative to the environment of the pedestrian, such as the outdoor temperature, air pressure and/or altitude. The device 100a or 100b may also be configured to send these values to be processed by an external device, such as a smartphone, any connected device, or a remote server.
In order to monitor the activity of the pedestrian, the device 100a or 100b comprises a first sensor to obtain measured values of a first set of data representative of a speed of the pedestrian, or a derivative thereof, and a second sensor configured to obtain measured values of a second set of data representative of an altitude of the pedestrian, or a derivative thereof. The first sensor may be for example an accelerometer, a pedometer, a heart rate sensor, a GNSS receiver, or more generally any kind of sensor that allows obtaining, directly or indirectly, a first set of data representative of a speed of the pedestrian, or a derivative thereof. The second sensor may be for example a barometric pressure sensor, a barometer, an accelerometer, a GNSS receiver, or more generally any kind of sensor that allows obtaining, directly or indirectly, measured values of a second set of data representative of an altitude of the pedestrian, or a derivative thereof.
The devices 100a and 100b are provided by means of examples only. However the invention is not restricted to these examples. Any suitable type or shape of device can be used. The invention is also applicable to a computing device that receives measurements data from devices such as the devices 100a and 100b.

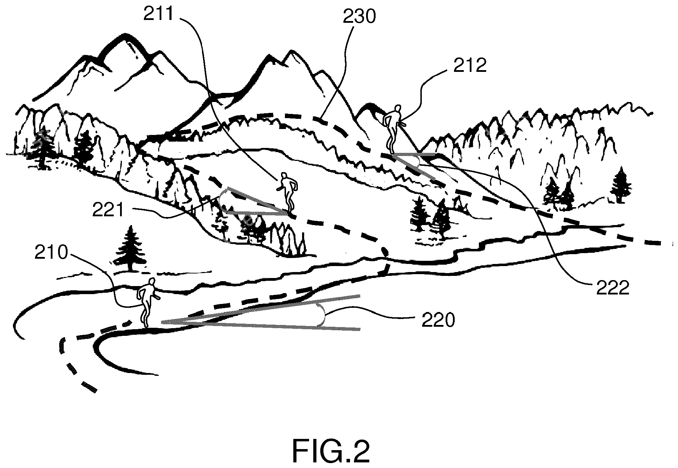

The figure 2 displays a pedestrian performing hiking and wearing a device according to the invention.
Figure 2 represents a human pedestrian. However, it should be noted that the term "pedestrian" does not only designate a human pedestrian. Indeed, the invention is applicable to any kind of pedestrian, such as a human pedestrian, but also an animal or robot pedestrian, provided that the pedestrian is able to carry sensor housings and is moving by performing actual steps. In the following part of specification, walking may be used for any kind of such movement.
The pedestrian is hiking along a hike path 230. During the hike, he progressively goes through successive positions in the hike path, for example the positions 210, 211, 212. At each position, the pedestrian is walking according to an immediate path slope of the hike path. For example, at position 210, the pedestrian is walking with a low positive path slope 220; at position 211, the pedestrian is walking with a high positive path slope 221; at position 212, the pedestrian is walking with a high negative path slope 222.
At each position, the path slope has an impact on the speed, and more generally the movement, of the pedestrian. Indeed, the pedestrian is generally moving slowly, and with a low pace, at high positive slopes, because much effort is needed to climb the hike path at high positive slopes. The pedestrian also moves slowly, and with a low pace, at high negative slope, in order to avoid falling. On the contrary, the pedestrian is expected to move faster at a null or low negative or positive slope. The theoretical relationship between the slope and the speed of the user is explained with greater details with reference to figure 4. The knowledge of the path slope at every instant thus provides useful information regarding the movement of the user, and vice versa. However the instantaneous path slope of the hike path is a priori unknown. Therefore, one of the objectives of the invention is to constantly estimate the instantaneous path slope of the path of the pedestrian using available measurements, and use the theoretical relationship between the slope and the speed of the user in order to perform data fusion between the measurements.

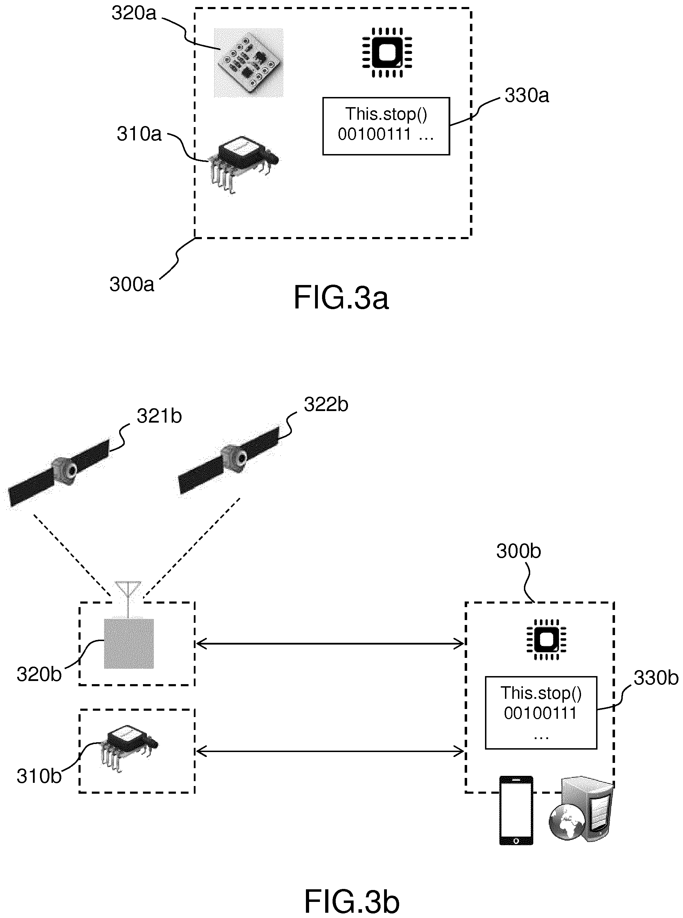

Figures 3a and 3b display two examples of a functional architecture of a device referring to two potential

EP 3 388 951 B1

embodiments of the invention.

Figure 3a displays a first example of a functional architecture of a device 300a in a first embodiment of the invention. The device 300a is intended to be carried by the user, and may be for example one of the devices 100a and 100b. According to various embodiments of the invention, the device 300a may be for example a smartphone, a smartwatch, or any suitable device comprising sensors and processing capabilities, carriable by or associated to the user. The sensors may be carried either directly (for example through a wrist) or indirectly (for example if the sensor is tied to a shoe, worn by the pedestrian) by the pedestrian.

The device 300a comprises a first sensor 310a configured to obtain measured values of a first set of data representative of a speed of the pedestrian, or a derivative thereof. Thus, the first sensor may be any sensor that provides information directly or indirectly related to the speed of the user.

In the application, the speed of the pedestrian is a speed of the pedestrian in a 3D fixed frame of reference. Thus, the estimation of the speed of the pedestrian at successive time steps allows calculating the total distance walked or ran by the pedestrian. In the application, the "speed" of the pedestrian generally describes the norm of the velocity of the pedestrian in a 3D frame of reference. Thus, the estimation of the speed of the pedestrian at successive time steps allows calculating the total distance walked or ran by the pedestrian in this frame of reference. The "speed" of the pedestrian may also describe the components of the velocity of the pedestrian in a 3D frame of reference. Thus, the estimation of the speed of the pedestrian at successive time steps allows calculating the total distance walked or ran by the pedestrian along each axis of this frame of reference.

In an embodiment of the invention, the first sensor 310a is an accelerometer (for example a 1-axis, a 2-axis or a 3-axis accelerometer). The first set of data may comprise raw measurements from the accelerometer, a norm of the acceleration of the user, accelerometer measurements on a single axis, or any set of data directly or indirectly obtained by the accelerometer which is relative to the acceleration of the user.

In another embodiment of the invention, the first sensor 310a is a pedometer, and the first set of data may be one of a step frequency or pace, step count, or a combination thereof. In the course of the application, a sensor is defined as a pedometer, if it outputs a step count or a step frequency. The invention is applicable to any kind of pedometer, for example a pedometer comprising an accelerometer, and processing capabilities to determine a step frequency or step count based on accelerometer measurements. The invention is also applicable to an accelerometer with pedometer function, which outputs both acceleration of the pedestrian, and a step count or step frequency. The invention is also applicable to a pedometer comprising a mechanical assembly, such as a spring-suspended lever arm, and processing capabilities to determine a step frequency or step count based on measurements of the mechanical assembly movements.

In yet another embodiment of the invention, the first sensor is a GNSS receiver, and the first set of data one of a GNSS estimate speed or GNSS estimated acceleration.

More generally, the first sensor may be any kind of sensor configured to obtain measured values of the first set of data representative of the speed of the pedestrian, or a derivative thereof, when the first sensor is worn by the pedestrian or carried by the pedestrian.

The device 300a comprises a second sensor 320a configured to obtain measured values of a second set of data representative of an altitude of the pedestrian, or a derivative thereof.

In an embodiment of the invention, the second sensor 320a is a barometer. The second set of data may be for example an air pressure, an absolute altitude, or a relative altitude, or a combination thereof. A relative altitude can be calculated directly from air pressure, while an absolute altitude can be obtained by performing a difference between air pressure, and a reference air pressure at a reference altitude.

In another embodiment of the invention, the second sensor 320a is a GNSS receiver, and the second set of data is a satellite-based altitude of the user.

In yet another embodiment of the invention, the second sensor 320a is an accelerometer, and the second set of data is one of a vertical acceleration of the user measured by the accelerometer, or a vertical speed of the user obtained from the accelerometer.

In yet another embodiment of the invention, the second sensor 320a is a thermometer. Variations of altitude can be inferred from variation of temperature. It is also possible to obtain an evaluation of the altitude of the pedestrian from a comparison between the measured temperature and a measurement of temperature performed at a meteorological station of known altitude, for example using the ideal gaz law (PV = nRT), or a gradient of temperature.

In a number of embodiments of the invention, the second sensor 320a is complemented with a further sensor which provides measurements related to the altitude of the pedestrian. For example, the second sensor 320a can be a barometer, and the device 300a can further comprise a thermometer. Measurements of altitude, or a derivative thereof, can be obtained by fusing measurements of pressure and altitude.

More generally, the second sensor may be any kind of sensor configured to obtain measured values of the second set of data representative of the altitude of the pedestrian, or a derivative thereof, when the second sensor is worn by the user or carried by the user.

In a number of embodiments, the measurements rely on a first source of data and a second source of data,

7

rather than a first and a second sensor. The first source of data is related to speed or a derivative thereof. The second source of data is related to altitude or a derivative thereof. According to various embodiments of the invention, the first and second sources of data are provided by first and second sensor respectively. In other embodiments of the invention, the first and second sources of data are provided by a first and a second output of a single sensor. For example, the first source of data can be a horizontal acceleration sensed by an accelerometer, and the second source of data a vertical acceleration sensed by the same accelerometer.

The device 300a further comprises a processing logic 330a configured to calculate estimated values of a state vector of the pedestrian comprising a first element representative of the speed of the pedestrian, or a derivative thereof, a second element representative of the altitude of the pedestrian, or a derivative thereof, and a path slope, based on said measured values of the first set of data, said measured values of the second set of data, and a model of the pedestrian motion comprising a relationship between at least a speed of the pedestrian or a derivative thereof and a path slope or a derivative thereof.

According to various embodiments of the invention, the model may define a relationship between a speed of the pedestrian and the current path slope. In other embodiments of the invention, the model may define a relationship between other values related to the speed and the path slope. For example, the model may define a relationship between the acceleration and the derivative of the path slope, or the acceleration and a combination of the path slope and the derivative of the path slope. The relationships defined in the model may also comprise additional parameters. For example, the model may define a relationship between the speed and a function of the path slope and the temperature (for example if the pedestrian is expected to walk slowly at low temperature). The model may also integrate other parameters such as the wind direction and speed, the humidity, or the type of pavement of the path, if such information is available.

The state vector used in the invention is remarkable in that is incorporates the path slope, which is not directly measured by sensors. The presence of the path slope within the state vector allows, along with the model of the pedestrian, to perform a more efficient and accurate data fusion between the first element, representative of the speed of the pedestrian, or a derivative thereof, and the second element, representative of the altitude of the pedestrian, or a derivative thereof, and therefore obtain more reliable values of the first and the second elements.

In a number of embodiments of the invention, the first element and the first set of data belong to the same type of data. For example, the first set of data and the first element may be both a stride frequency of the pedestrian. In other embodiments of the invention, the first element and the first set of data belong to different types of data, although they are both in relation to the speed of the user. For example, the first set of data can be a stride frequency, while the first element is a speed of the pedestrian.

In a number of embodiments of the invention the second element and the second set of data belong to the same type of data. For example, the second set of data and the second element may be both a total air pressure. In other embodiments of the invention, the second element and the second set of data belong to different types of data, although they are both in relation to the altitude of the user. For example, the second set of data can be a total air pressure, while the second element is a contribution of altitude to air pressure.

According to various embodiments of the invention, the processing logic 330a may be a processor operating in accordance with software instructions, software instructions to be loaded by a processor, a hardware configuration of a processor, or a combination thereof. It should be understood that any or all of the functions discussed herein may be implemented in a pure hardware implementation and/or by a processor operating in accordance with software instructions. It should also be understood that any or all software instructions may be stored in a non-transitory computer-readable medium.

The path slope defines the current slope of the path the pedestrian is walking or running in. The value of the path slope is an angle, and may be expressed using different conventions. For example, the path slope may be defined in degrees or radians. The angle of path slope is usually calculated from a horizontal plane. In a number of embodiments of the invention, the path slope has a null value for a horizontal path, a positive value for a climbing path, and a negative value for a descending path. For example, referring back to figure 2, the angles 220 and 221 have a positive value, and represents the path slope of a climbing path, while angle 222 has a negative value, and represents the path slope of a descending path.

The processing logic 330a is configured to calculate, at successive time steps, estimated values of the state vector of the pedestrian. In a number of embodiments of the invention, the state vector comprises, in addition to the first set of data, the second set of data, and the path slope, other relevant values such as the pace of the user, the horizontal acceleration or the vertical acceleration of the user.

In a number of embodiments of the invention, the successive time steps can be a number with successive values 1, 2, ... k, and, at each time step k, the processing logic 300a is configured to perform two successive calculation steps:

- A prediction step to calculate predicted values of the state vector at step (k), based on predicted values at the output of one or more preceding steps (k-1, k-2...), and said model of the pedestrian;

- An update step to modify values of the state vector at step (k), minimize a difference between observed values of the first and second elements, based on said first and second sets of data, and predicted values of the first and second element at step (k).

This allows providing a good estimation of the state vector, by using both prediction based on models and comparison/readjustment with measurements, even if measurements are noisy.

In an embodiment of the invention, the prediction step may consist in simply assigning to the predicted values of the state vector at step (k), the values of the state vector at the output of update step at step (k-1). In other embodiments of the invention, a more complete prediction can be performed. For example, if the state vector comprises both a speed and an acceleration of the pedestrian, the speed at step (k) can be predicted, based on the speed and the acceleration at step (k-1). The model of the pedestrian can also be used to predict the speed of the pedestrian at step (k) based on the path slope at step (k-1), the path slope at step (k) based on the speed of the pedestrian at step (k-1), or both the speed and the path slope at step (k) based on the speed and the path slope at step (k-1). In a number of embodiments of the invention, the speed at step (k) is calculated based on a combination of the speed, the acceleration, and the path slope at step (k-1).

The update step consists in updating predicted values at step (k), based on observed values of the first and second elements. The observed values of the first element are obtained from the measured values of the first set of data, and the observed values of the second element are obtained from the measured values of the second set of data. According to various embodiments of the invention, the observed values of the first and second elements may be obtained directly or indirectly. For example, if the first element and the first set of data are both a speed of the pedestrian, the observed value of the first element is obtained directly from the first set of data. In another example, the first set of data is a stride frequency of the user, and the first element is a speed of the user. The speed of the user can be obtained by multiplying the stride frequency by stride length.

The prediction step ensures that the state vector fairly matches the model of the pedestrian, and has a good internal consistency at each time step, while the update step ensures, at each time step, that estimated values of the state vector do not diverge from actual measurements, even though the measurements are noisy.

In a number of embodiments of the invention, the measurement precision of the first sensor, and the measurement precision of the second sensor are known, the first set of data may then be associated with a first uncertainty value, based on a measurement precision of the first sensor, and the second set of data associated with a second uncertainty value, based on a measurement precision of the second sensor. The measurement precision may be fixed for each sensor, or associated with each measurement.

In a number of embodiments of the invention, uncertainty values are expressed in the form of a range of possible values around the measurement. For example, if the second sensor is a barometer, the second set of data is an absolute pressure expressed in hPa, and the second sensor has a measurement precision of $\pm$ 1 mbar, the measured value of the second set of data at step (k) may be expressed for example as: $P_{meas}(k) = 900 \pm 0.12$ hPa. The uncertainty values depend mostly on the accuracy of the sensor which is used, the accuracy varying greatly according to the sensor manufacturers or models. The uncertainty values may also be variable. For example, the accuracy of a pressure sensor may depend upon temperature.

In other embodiments of the invention, uncertainty values are expressed in the form of a variance, or standard deviation of measurements. A measured value of pressure from the second sensor may then be expressed in the form of a distribution of probability, with a mean and a standard deviation, for example: $\mu_P = 900$ hPa; $\sigma^2_P = 1$ hPa. This allows calculating a range of possible values where value the first or second set of data is found with a defined probability (for example a 95% or 99% probability). A range of possible values of the first and second element can be obtained from a range of possible values of the first set of data and the second set of data, in a straightforward manner.

The first and second uncertainty values can be used during the update step, in order to take into account the reliability of measurements. For example, the lesser the uncertainty value of a measurements, the more the measurement can be taken into account to update values of the first or second set of data during the update step.

Figure 3b displays a second example of a functional architecture of a device 300b in an embodiment of the invention.

The device 300b comprises a processing logic 330b, which is similar to the processing logic 330a. Unlike the device 300a, the device 300b does not comprise a first and a second sensor. The device 300b is in connection to a first sensor 310b, similar to the first sensor 31 0a, but located in a separate housing. The device 300b is in connection to a second sensor 310b, similar to the second sensor 310a, but located in a separate housing. According to various embodiments of the invention, the first sensor 310b and second sensor 320b may be located in the same housing, or in two different housings. However this representation is provided by means of non limitative example, and the first sensor 310b, and the second sensor 320b may connected by any type of suitable connection, for example a wired connection, a wireless (Bluetooth, Wi-Fi...) or an optical connection.

In the embodiment displayed in figure 3b, both the first sensor 310b, and the second sensor 320b are intended to be worn or carried by the user. The device 300b may be worn or not by the user. The device 300b may be for example a smartphone connected to a device worn by the user comprising the first sensor 310b and the second sensor 320b, for example a smartwatch. The device 300b may also be a computer, or a server connected to the first sensor 310b and the second sensor 320b, which are worn by the user. User can also carry the sensor in a bag, integrated in a walking stick or on other devices such as clothes, etc...

In the figure 3b, the second sensor 320b is a GNSS receiver configured to receive GNSS signals from GNSS satellites 321b, 322b and calculate the altitude of the user using these signals. However this representation is provided by means of non limitative example, and the first sensor 31 0b, and the second sensor 320b, may be any of the suitable sensors discussed with reference to the first sensor 31 0a, and the second sensor 320a of figure 3a.

The devices 300a and 300b are provided by means of non limitative examples of possible architecture of a device according to the invention. However other architectures are possible. For example only one of the first sensor or the second sensor may be located within the same device than the processing logic.

Figure 4 displays two examples of functions for establishing a relationship between a speed the user and a path slope in two embodiments of the invention.

According to various embodiments of the invention, different relationships between the speed of the pedestrian and the slope of the path can be used. For example, the Tobler's hiking function or the Naismith's rule may be used, with or without one of the Tranter, Aitken or Langmuir corrections.

Tobler's hiking function is an exponential function determining the walking speed, taking into account the slope angle, and has been defined by Tobler, W. (1993), Three presentations on geographical analysis and modeling, NCGIA. Naismith's rule is a rule to calculate how long hiking on a hiking path may take, depending on the slope of the hiking path, and then also defines a relationship between the path slope and the speed of the user. Different improved versions of this function exist. For example corrections may be one or more of:

- Tranter's correction, disclosed for example by Kennedy, P (1998) Wilderness Rules, Available from http://www.gillean.demon.co.uk/Naismith/Naismith.htm
- Aitken's correction, disclosed for example by Aitken, Robert (1977). Wilderness Areas in Scotland, unpublished Ph.D. Thesis. University of Aberdeen;
- Langmuir's correction, disclosed for example by Langmuir, Eric (2013). Mountaincraft and Leadership; A Handbook for Mountaineers and Hillwalking Leaders in the British Isles (Fourth ed.). Mountain Training England; Mountain Training Scotland. pp. 38-39. ISBN 978 0 9568869 0 3.

The graph 400 displays a Tobler's hiking function 410, and a Naismith's rule with Langmuir correction 420. The two functions provide a speed of the pedestrian as a function of path slope. The speed of the user is represented in the vertical axis 402, in kilometers per hour, while the path slope is represented in the horizontal axis 401, in degrees.

Both the maximum speed 411 for the Tobler's function, and the maximum speed 421 for the Naismith's rule with Langmuir correction, corresponds to a low negative path slope 403, that is to say a slope which is slowly descending. On the other hand, according to both Tobler's hiking function 410, and the Naismith's rule with Langmuir correction 420, the speed of the user is lower for highly negative or positive slope, and is generally lower as the value of the path slope is different from the low negative path slope 403.

In an embodiment of the invention, the same predefined function may be used for all pedestrians. In other embodiments of the invention, the Tobler's hiking function or Naismith's rule is parameterized using one or more of an age of the pedestrian, a gender of the pedestrian, an height of the pedestrian, and a weight or a body mass index of the pedestrian. This allows obtaining a more accurate function that takes into account parameters having an impact on the speed of the user. In the case of a Tobler's hiking function, the function is parameterized by setting the value of a Tobler coefficient $K_{Tobler}$.

In a number of embodiments of the invention, the Tobler's hiking function or Naismith's rule may be parameterized using the pace of the pedestrian. The Tobler's hiking function or Naismith's rule may then be adjusted in real time, when a pace change of the pedestrian is detected.

Figure 4 displays two examples of functions to determine a speed of the user as a function of the path slope. However these functions are provided by means of example only, and any other function, rule or model that provides a relationship between the speed of the user and the path slope can be used in the invention, and parameterized with one or more of an age of the pedestrian, a gender of the pedestrian, an height of the pedestrian, a weight or a body mass index of the pedestrian and a pace of the pedestrian.

Figure 5 displays an example of an extended Kalman filtering in a number of embodiments of the invention.

According to various embodiments of the invention, the processing logic 330a or 330b can be configured to calculate estimated values of the state vector of the pedestrian using one or more of a Kalman filter, or extended Kalman filter, an unscented Kalman filter, a central difference Kalman filter, or a particle filter. The figure 5 displays an example of an extended Kalman filter 510 for calculating estimated values of the state vector of the pedestrian. However figure 5 is provided by means of example only, and the invention is applicable to any technique to calculate estimated values of the state vector based on a model of the pedestrian, and measured values of the first set of data and the second set of data, and/or perform data fusion between the first sensor 310a, 310b, and the second sensor 320a, 320b using the model of the pedestrian.

In the example displayed in figure 5, the first sensor 310a, 310b is a pedometer, and the first set of data is a step count. The second sensor 320a, 320b is a barometer, and the second set of data is an air pressure. The measurements $p_{baro}$ of air pressure performed by the barometer are the sum of a static pressure $p_s$ which is the ambient pressure at the altitude of the initialization of the barometer, and an altitude pressure $p_a$, which corresponds to a contribution to pressure of the difference of altitude between the altitude at which the barometer was initialized, and the current altitude of the pedestrian. We have thus:

$$p_{baro} = p_a + p_s \qquad \textit{(Equation 1)}$$

The state vector of the extended Kalman filter 510 is given by:

$$\begin{bmatrix} v \\ \alpha \\ p_a \\ p_s \end{bmatrix}$$

Wherein:

- v is the speed of the pedestrian (first element of the state vector, representative of the speed of the user);
- $\alpha$ is the path slope;
- $p_a$ is the pressure due to altitude (second element of the state vector, representative of the altitude of the user);
- $p_s$ is the static pressure, the contribution of weather to ambient pressure.

The Kalman filter is configured to calculate values of the state vector at successive time steps 1, 2, ... k. In the description below, a value without index generally designates a data, and a value with an index represents the value of this data at a time step. For example, $\alpha$ generally designates the path slope, and $\alpha_k$ is the value of the path slope at step $k$.

It shall be noted that the state vector above is provided by means of non limitative example only, and other state vactor may be used in the invention. For example, a man skilled in the art may add other parameters such as the temperature, according to his needs.

The state vector can be initialized using different values. In an embodiment of the invention, the state vector is initialized to:

$$\begin{bmatrix} 5\ kph \\ 0° \\ 0\ hPa \\ p_O\ hPa \end{bmatrix}$$

Wherein $p_0$ is the static pressure measured by the barometer at the initialization of the Kalman filter.

The Kalman filter is executed at successive time steps, each time step having a duration $\Delta T$, which may be for example 0.1 to 10 seconds. The data fusion block in figure 5 outputs a number of different values, some read from the sensors and provided "as is", some being the result of processing steps, which are:

- The step count 520, as measured by the pedometer;
- The speed v 521 of the pedestrian, which is the speed v of the state vector of the extended Kalman filter;
- The distance crossed at the current step k, which is calculated based on the speed at the successive time steps:

$$distance_k = \sum_{j=0}^{k-1} \Delta T * v_j \quad \textit{(Equation 2)}$$

- The uphill elevation 522 and downhill elevation (or distance descended) 523 of the pedestrian, which respectively represent the cumulated elevation that was climbed up and down by the user:

o The uphill elevation 522 is incremented at each time step k wherein the path slope $\alpha_k$ is positive:

$$\text{elevup}_0 = 0; \text{ if } \alpha_k > 0, \text{ elevuphill}_0 = \text{elevup}_{k\text{-}1} + \Delta T * v_k * sin(\alpha_k)$$

*(Equation 3)*

o The downhill elevation 523 is incremented at each time step k wherein the path slope $\alpha_k$ is negative:

$$\text{elevdown}_0 = 0; \text{ if } \alpha_k < 0, \text{ elevdown}_0 = \text{elevdown}_{k\text{-}1} + \Delta T * v_k * sin(\alpha_k)$$

*(Equation 4)*

- The path slope $\alpha_k$ at time step k.

Any of the outputs can be used afterwards, for example to be displayed to the pedestrian. The outputs may also be sent to a remote device such as smartphone, or a server, to be further processed. The outputs may be for example published online, or used in a sport application.

The state transition of the Extended Kalman Filter can be performed in different modes according to different embodiments of the invention. In a number of embodiments of the invention, a properly calibrated Tobler function (or an equivalent function or model providing a relationship between the path slope and speed of the pedestrian) is available. A state transition model (that will be called "regular mode" in the specification below) can be defined using the following assumptions.

The speed of the user at time step k is calculated based on the path slope at time step k-1, and the Tobler's hiking function:

$$v_k = K_{Tobler} * 6 * e^{-3.5*abs(tan(\alpha_{k-1})+0.05)} + w_{v,k} \qquad \text{(Equation 5)}$$

Wherein $w_{v,k}$ is the process noise at time step k, related to the speed of the pedestrian.

The path slope is approximated to the path slope at the preceding step, and a process noise:

$$\alpha_k = \alpha_{k-1} + w_{\alpha,k} \qquad \text{(Equation 6)}$$

Wherein $w_{\alpha,k}$, is the process noise at time step k, for the path slope.

The variation of the pressure due to altitude is calculated using the international standardized barometric formula:

$$p_{a,k} = (p_{a,\,k-1} + p_{s,\,k-1}) * \left(1 - \frac{0.0065 * v_{k-1} * \Delta T * sin(\alpha_{k-1})}{T^0_k}\right)^{5.255} - p_{s,\,k-1} + w_{p_a,k}$$

*(Equation 7)*

Wherein $w_{p_a,k}$ is the process noise at time step k for the altitude pressure, and $T^0_k$ a temperature measured at time step k, by the barometer or a sensor close enough to the barometer to provide air temperature where the pressure is measured. $v_k * \Delta T * sin(\alpha_{k-1})$ provides an estimated variation of the altitude of the pedestrian.

The static pressure is approximated to the static pressure at the preceding step, plus a process noise:

$$p_{s,k} = p_{s,k-1} + w_{p_s,k} \qquad \text{(Equation 8)}$$

Wherein $w_{p_s,k}$ is the process noise at time step k, for the static pressure.

The state transition model of the regular mode can thus be expressed by the transition matrix:

$$\begin{bmatrix} v_k \\ \alpha_k \\ p_{a,k} \\ p_{s,k} \end{bmatrix} = \begin{bmatrix} 0 & f_1 & 0 & 0 \\ 0 & 1 & 0 & 0 \\ f_2 & f_3 & f_4 & f_5 \\ 0 & 0 & 0 & 1 \end{bmatrix} \begin{bmatrix} v_{k-1} \\ \alpha_{k-1} \\ p_{a,k-1} \\ p_{s,k-1} \end{bmatrix} \qquad (Equation\ 9)$$

It is possible to infer the values of the coefficients of the transition matrix from Equations 5 to 9:

$$f_1(\alpha_{k-1}) = \frac{K_{Tobler} * 6 * (-3.5) * sec^2(\alpha_{k-1}) * (0.05 * tan(\alpha_{k-1}))e^{-3.5*abs(tan(\alpha_{k-1})+0.05)}}{abs(0.05 + tan(\alpha_{k-1}))}$$

*(Equation 10)*

$$f_2(v_{k-1}, \alpha_{k-1}, p_{a,k-1}, p_{s,k-1}) =$$

$$-\frac{\left((p_{a,k-1} + p_{s,k-1}) * 0.0065 * 5.255 * \Delta T * sin(\alpha_{k-1})\left(1 - \frac{0.0065 * v_{k-1} * \Delta T * sin(\alpha_{k-1})}{T^0{}_k}\right)^{4.255}\right)}{T^0{}_k}$$

*(Equation 11)*

$$f_3(v_{k-1}, \alpha_{k-1}, p_{a,k-1}, p_{s,k-1}) =$$

$$-\frac{\left((p_{a,k-1} + p_{s,k-1}) * 0.0065 * 5.255 * v_{k-1} * \Delta T * cos(\alpha_{k-1})\left(1 - \frac{0.0065 * v_{k-1} * \Delta T * sin(\alpha_{k-1})}{T^0{}_k}\right)^{4.255}\right)}{T^0{}_k}$$

*(Equation 12)*

$$f_4(v_{k-1}, \alpha_{k-1}) = \left(1 - \frac{0.0065 * v_{k-1} * \Delta T * sin(\alpha_{k-1})}{T^0{}_k}\right)^{5.255}$$

*(Equation 13)*

$$f_5(v_{k-1}, \alpha_{k-1}) = \left(1 - \frac{0.0065 * v_{k-1} * \Delta T * sin(\alpha_{k-1})}{T^0{}_k}\right)^{5.255} - 1$$

*(Equation 14)*

The observation model of the Extended Kalman Filter can be built upon the assumption below.

The pedometer measures a step frequency, and a measured speed of the user at time step k $V_{pedo,k}$ is obtained by multiplying the step frequency by a stride of the user. We thus have:

$$v_{pedo,k} = v_k + w_{v_{pedo,k}} \qquad (Equation\ 15)$$

Wherein $w_{v_{pedo,k}}$ is an observation noise of the pedometer.

Note that the typical relationship between the step frequency, the stride length and the user speed is assumed to be known beforehand and can be parameterized using one or more of age of the pedestrian, gender of the pedestrian, height of the pedestrian, and weight and/or a body mass index of the pedestrian.

The barometer measures at each time step a pressure $p_{baro,k}$, which is the sum of the static and the altitude pressure. We thus have:

$$p_{baro,k} = p_{a,k} + p_{s,k} + w_{p_{baro,k}} \qquad \text{(Equation 15)}$$

Wherein $w_{V_{pedo,k}}$, is an observation noise of the barometer.

The observation matrix of the Extended Kalman Filter is thus built as:

$$\begin{bmatrix} v_{pedo,k} \\ p_{baro,k} \end{bmatrix} = \begin{bmatrix} 1 & 0 & 0 & 0 \\ 0 & 0 & 1 & 1 \end{bmatrix} \begin{bmatrix} v_k \\ \alpha_k \\ p_{a,k} \\ p_{s,k} \end{bmatrix} \qquad \text{(Equation 16)}$$

Based on the equations and matrixes above, the Extended Kalman Filter can be executed with the predict and update steps, for example by performing the series of operations below at each time step k:

**Predict**

Predicted state estimate

$$\hat{x}_{k|k-1} = f(\hat{x}_{k-1|k-1}, u_{k-1})$$

Predicted covariance estimate

$$P_{k|k-1} = F_{k-1} P_{k-1|k-1} F_{k-1}^{\top} + Q_{k-1}$$

**Update**

Innovation or measurement residual

$$\tilde{y}_k = z_k - H_k \hat{x}_{k|k-1}$$

Innovation (or residual) covariance

$$S_k = H_k P_{k|k-1} H_k^T + R_k$$

*Optimal* Kalman gain

$$K_k = P_{k|k-1} H_k^T S_k^{-1}$$

Updated (a *posteriori*) state estimate

$$\hat{x}_{k|k} = \hat{x}_{k|k-1} + K_k \tilde{y}_k$$

Updated (a *posteriori*) estimate covariance

$$P_{k|k} = (I - K_k H_k) P_{k|k-1}$$

In a number of embodiments of the invention, the Tobler coefficient $K_{Tobler}$ may not be accurately known initially. The Tobler coefficient can be calculated in another mode of operation, called transient mode. In transient mode, the Equation 5 to obtain the speed of the user at time step k by applying the Tobler function is replaced by an estimation of the speed of the user at the previous time step, and the transition model is defined by:

$$v_k = v_{k-1} + w_{v,k} \qquad \text{(Equation 17)}$$

$$\alpha_k = \alpha_{k-1} + w_{\alpha,k} \qquad \text{(Equation 6)}$$

$$p_{a,k} = (p_{a,\ k-1} + p_{s,\ k-1}) * \left(1 - \frac{0.0065 * v_{k-1} * \Delta T * sin(\alpha_{k-1})}{T^0{}_k}\right)^{5.255} - p_{s,\ k-1} + w_{p_a,k}$$

$$\text{(Equation 7)}$$

$$p_{s,k} = p_{s,k-1} + w_{p_{s,k}} \qquad \text{(Equation 8)}$$

Based on the equations above, the state transition matrix of the transient mode is:

$$\begin{bmatrix} v_k \\ \alpha_k \\ p_{a,k} \\ p_{s,k} \end{bmatrix} = \begin{bmatrix} 0 & 1 & 0 & 0 \\ 0 & 1 & 0 & 0 \\ f_2 & f_3 & f_4 & f_5 \\ 0 & 0 & 0 & 1 \end{bmatrix} \begin{bmatrix} v_{k-1} \\ \alpha_{k-1} \\ p_{a,k-1} \\ p_{s,k-1} \end{bmatrix} \qquad (Equation\ 18)$$

Wherein $f_2, f_3, f_4$ and $f_5$ are the same as in regular mode, and are thus defined by equations 11 to 14. The observation matrix of the transient mode is identical to the observation matrix of the regular mode.

During the operation of the transient mode, the Tobler coefficient $K_{Tobler}$ can be calculated by:

- Calculating a variation of altitude over a time duration based on barometer measurements;
- Using one or more estimated speeds $v_k$ during the time duration to estimate a distance crossed by the user during said time duration;
- Calculating the path slope corresponding to the distance crossed by the user, and the variation of altitude;
- Calculating the Tobler coefficient $K_{Tobler}$ corresponding to the path slope and speeds of the user, for example by using an inverse of the Tobler's hiking function provided in Equation 5.

In some cases, the pedestrian may stop moving during a certain amount of time. It may be desirable to stop the execution of the Extended Kalman Filter during this stop. In a number of embodiments of the invention, a special processing mode is used when it is detected that the pedestrian stops walking. When the special processing mode is activated at a time $t_1$, the state vector at time $t_1$ is saved:

$$\begin{bmatrix} v_{t1} \\ \alpha_{t1} \\ p_{a,t1} \\ p_{s,t1} \end{bmatrix}$$

During the special processing mode, the changes of pressure measured by the barometer are stored, in order to take into account natural changes of the static pressure. When it is detected that the pedestrian resumes walking at a time t2, a total change of the static pressure during the special processing mode is calculated:

$$\Delta P = p_{baro,t2} - p_{baro,t1} \qquad (Equation\ 19)$$

In an embodiment of the invention, the Extended Kalman Filter is reinitialized in regular mode using a state vector at time t2:

$$\begin{bmatrix} v_{t2} = v_{t1} \\ \alpha_{t2} = \alpha_{t1} \\ p_{a,t2} = p_{a,t1} \\ p_{s,t2} = p_{s,t1} + \Delta P \end{bmatrix}$$

This allows a clean re-initialization of the Extended Kalman Filter. Indeed, since the pedestrian did not move between t1 and t2, the path slope and altitude pressure should be identical between times t1 and t2, while the addition of $\Delta P$ to the static pressure allows taking into account the natural changes of static pressure.

In another embodiment of the invention, when it is detected that the user resumes walking, the Extended Kalman Filter is completely re-initialized. For example, it may be initialized with a null slope, a preset value of speed, and a new measurement of static pressure. For example, the Kalman Filter whose execution was suspended can be initialized with the state vector below:

$$\begin{bmatrix} v_{t2} = 5\ kph \\ \alpha_{t2} = 0° \\ p_{a,t2} = 0\ hPa \\ p_{s,t2} = p_{baro,t2} \end{bmatrix}$$

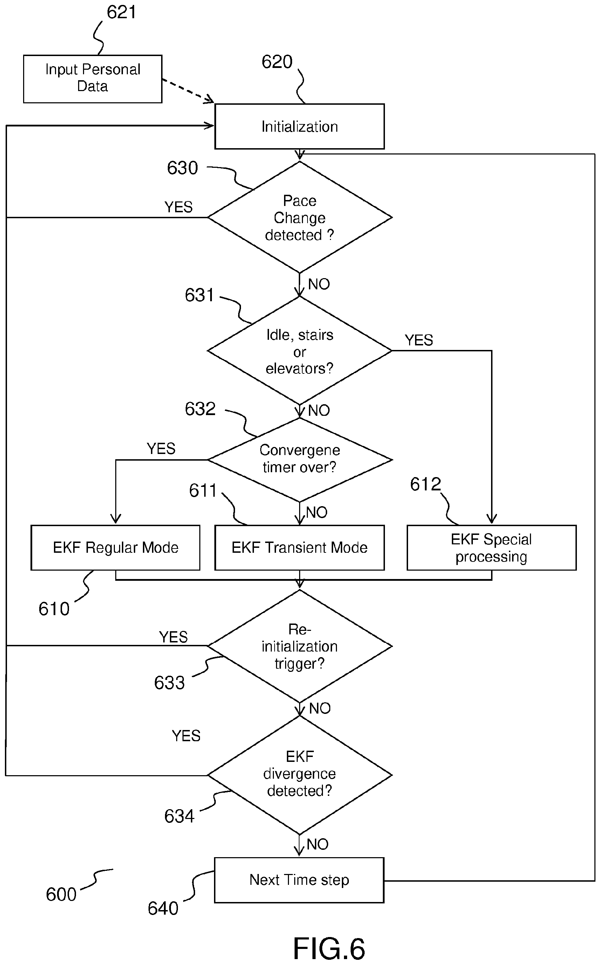

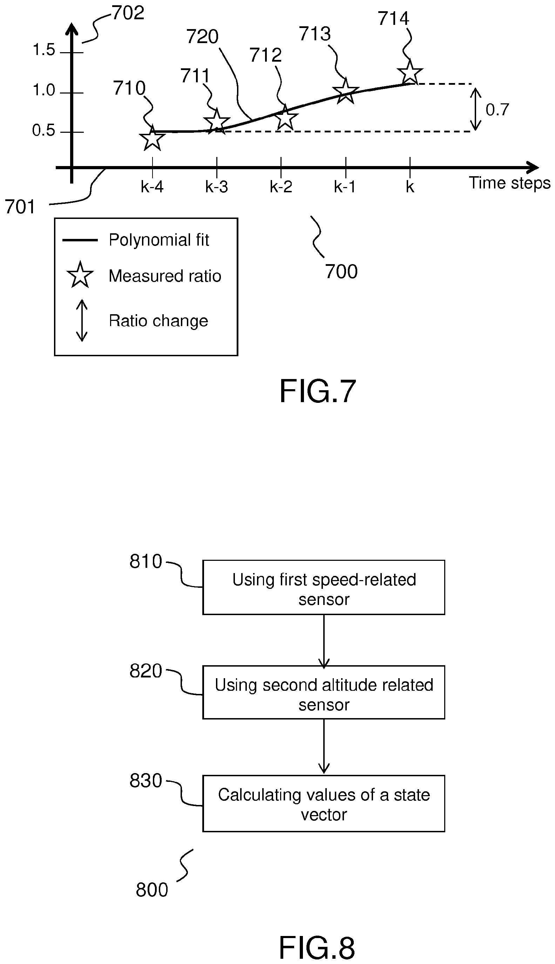

In a number of embodiments of the invention, the mode of operation of the Extended Kalman Filter may be changed according to a pace change detection 530. Examples of such changes will be explained with reference to figures 6 and 7 for illustration purposes.

In all embodiments of the invention involving the calculation of a state vector at successive time steps, a number of improvements or checks can be added in order to prevent an unlikely behavior such as estimation divergence.

In a number of embodiments of the invention, the variation of slope can be bounded between two successive time steps. This allows preventing an excessive variation of the estimated path slope between two successive time steps, which seems a reasonable assumption since there is very little chance that the path slope changes very suddenly in one time step. For example, the value of path slope at time step k $\alpha_k$ may be bounded to the value $\alpha_{k-1}$ + 10 sign($\alpha_k$ - $\alpha_{k-1}$). Thus, the variation of path slope between two successive time steps cannot exceed 10°. Other limits may be used, in different embodiments of the invention. The limitation of the variation of the path slope between two successive time steps may in particular depend on a number of factors, such as the instantaneous speed of the pedestrian, or the time step duration.

The same reasoning may apply to the static pressure change rate. For example, the value of static pressure at time step k $p_{s,k}$ may be bounded to the value $p_{s,k} + \frac{1,5 * 3600}{\Delta T} \text{sign}(p_{s,k} - p_{s,k-1})$, wherein $\Delta T$ is the duration of a time step, in seconds. The speed of change of the static pressure is thus limited to 1,5 hPa/h. This allows limiting the speed of change of static pressure to a speed of change that has a reasonable likelihood of appearance. Indeed, it is generally agreed that a speed of change of 2 hPa/h of the static pressure occurs only in case of very rare meteorological events (storm, hurricane, cyclone...) which lead to very fast variations of meteorological parameters (pressure, temperature, humidity...). However, other limit values may be used in other embodiments of the invention. The same principle can be used in embodiments of the invention wherein the state vector comprises other meteorological parameters. For example, if the state vector comprises the variation of temperature between two successive time steps can be bounded to a maximum variation of temperature in standard conditions.

In a number of embodiments of the invention, the computing resources needed to compute the functions $f_1, f_2, f_3, f_4$ and $f_5$ can be limited by one or more of:

- Using pre-computed tables, either for calculating a global result of the functions, or intermediary functions such as the trigonometric functions;
- For values that remain close to zero, calculating using limited developments (a.k.a. Taylor series) of certain functions;
- Separating the Tobler's hiking function into a number of segments represented by a piecewise linear function. Thus the speed of the pedestrian can be deduced from the path slope by determining to which segment the path slope belongs, then calculating the speed using the corresponding linear function.

Figure 6 displays an example of a logic of selection and execution of Kalman filters that may be used in a number of embodiments of the invention.

The logic 600 of selection and execution of Kalman filters can be performed for example by the processing logic 330a, 330b, or any other processing logic according to various embodiments of the invention. The logic 600 allows selecting the best mode of operation of the Kalman filter, among the 3 modes defined in relation to figure 5: the "Regular mode" 610, the "Special processing mode" 611, and the "Transient mode" 612.

The logic 600 comprises an initialization step 620. In a number of embodiments of the invention, the initialization step 621 uses personal input data, comprising parameters relative to the pedestrian, that have an impact on the model of the pedestrian. For example, personal input data may comprise the age, gender, weight and/or height of the user. The initialization may comprise initializing the state vector, and transition and observation matrices of the Kalman filter.

As discussed above, in a number of embodiments of the invention, when the Tobler coefficient $K_{Tobler}$ is unknown, the transient mode 612 is used to determine the value of the Tobler coefficient $K_{Tobler}$. In the example disclosed in figure 6, a convergence timer is used to ensure that the transient mode is executed during a duration long enough to have a reliable value of the Tobler coefficient $K_{Tobler}$. The initialization step 620 comprises initializing the convergence timer.

The logic 600 determines, at each time step, which mode of operation of the Kalman filter should be used. After initialization step 620, the logic comprises a step 630 to verify if a pace change is detected. According to various embodiments of the invention, different tests can be performed to detect a change of pace of the user. Figure 7 provides an example of such a test.

If a path change is detected, the logic 600 returns to the initialization step 620. Otherwise, test 631 is performed to detect if the pedestrian stopped walking or running. According to various embodiments of the invention, the test 631 may comprise detecting if the pedestrian is static, in an elevator, on mechanical stairs, in or on a transportation device, or in any other situation where the pedestrian does not move by performing steps. In other embodiments, the test may detect situation where the pedestrian moves in addition to a moving environment such as walking on mechanical stairs or mechanical sidewalk in motion.

Different tests are possible to determine if the pedestrian is static, in an elevator, on mechanical stairs, or in any other situation where the pedestrian does not walk or run. For example, the second test may be based on a comparison of the stride frequency measured by the pedometer, and the pressure change rate, to thresholds. For example:

- An idle state (pedestrian not moving) can be detected, if the stride frequency measured by the pedometer has been below 0.1 Hz over the past M steps, and the pressure change rate is close to zero;
- It can be detected that the pedestrian is on an inclined moving sidewalk, escalator, elevator, or in any other situation wherein the user is moving without walking or running, if the stride frequency measured by the pedometer is below 0.1 Hz, and the absolute value of pressure change rate is above 2.5 hPa / min.

This double test advantageously allows disambiguating cases wherein the pedestrian is not moving at all, and cases wherein the pedestrian is moving without performing movements by him/herself. In other embodiments of the invention, the same disambiguation can be performed using different test, for example using the norm of accelerometer measurements.

If the test 631 returns a positive result, the special processing mode 612 is activated. In a number of embodiments of the invention, if the test 631 detects that the user stopped running or walking, but is still moving (which is for example the case if the user is static in automatic stairs or in an elevator), the convergence timer is reset, and the state vector re-initialized. Thus, at the next step wherein it is detected that the pedestrian is walking or running, the Kalman filter is re-initialized in transient mode with a re-initialized state vector. This allows avoiding using a false assumption that the state vector did not change.

If the test 631 returns a negative result (i.e, if it detects that the pedestrian is walking or running), a test 632 is performed to detect if the convergence timer is over. If the convergence timer is not over, the transient mode 611 is used. Thus, the transient mode is used when the pedestrian is walking or running, until the convergence timer is over, in order to let enough time to the transient mode to calculate a proper value of the Tobler coefficient $K_{Tobler}$. If the convergence timer is over, the value $K_{Tobler}$ of the Tobler coefficient is known, and the normal mode 610 is used.

Once one of the normal mode 610, the transient mode 611, or the special processing mode 612 has been used, the state vector is updated. The logic 600 comprises a fourth test 633 to detect if the re-initialization trigger has been activated (which is the case, for example if the second test 631 detected that the pedestrian is in an elevator). If the re-initialization trigger has been activated, the whole process is re-initialized 620. Otherwise, a fifth test 634 is performed to detect if a divergence happened during the execution of the Kalman filter.

The test of divergence may be useful, if the pedestrian performed a very unnatural move that was not well detected by the Kalman filter. The divergence can be detected by analyzing a posteriori the covariance matrices of the Kalman filter. For example, the fifth test 634 can comprise calculating the $3\sigma$ FOM (acronym for Figure Of Merit) of the Kalman filter, and detecting a divergence if the $3\sigma$ FOM exceeds a threshold for at least one element of the state vector. For example, a divergence can be detected, if the $3\sigma$ FOM for speed if greater than 0.5 kph, or if the $3\sigma$ FOM for slope is greater than 5°. According to other embodiments of the invention, other thresholds, elements of the state vector, of FOM may be used. For example the fifth test 634 may use $2\sigma$ FOM, use a FOM of the altitude pressure, or use other thresholds.

If a divergence is detected, the process is re-initialized, the logic 600 returns to the initialization step 620. Otherwise, the next step is performed 640, starting from the first test 630 of pace change detection.

The logic 600 is provided by means of non-limitative example only. In other embodiments of the invention, at each time step, another method may be selected for modifying the state vector (for example, another type of Kalman filter, a Kalman filter with different transition and/or observation matrices, or another method, for example a particle filter). Different tests may also be performed, additional tests may be added, some tests may be deleted from the process and/or the tests may be performed in a different order.

Figure 7 displays an example of pace change detection applicable in a number of embodiments of the invention.

In an aspect of the invention, pace changes of the pedestrian can be detected, in order to modify the execution of Kalman filters. This is for instance the case with pace change detection 530, or test 631.

According to various embodiments of the invention, different methods are applicable to detect pace change. For example, pace change may be detected based on a comparison of pedometer readings, and GNSS-estimated speed.

In a number of embodiments of the invention, path changes are detected using the following steps:

- Retrieving the current speed and current slope of the pedestrian;
- Calculating a slope-based speed of the pedestrian, by applying Tobler's hiking function to the current slope of the user. The slope-based speed of the pedestrian provides a reference speed for a given slope;
- Calculating a ratio between the current speed of the pedestrian, and the slope-based speed of the pedestrian, based on preferences of the user. This ratio thus indicates if the pedestrian is walking faster or slower than he/she usually does depending on the slope;
- Classifying the pace of the pedestrian, based on said ratio.

This allows classifying the pace of the pedestrian, without needing additional measurements. Meanwhile, the use of the reference walking speed of the user allows performing a precise classification for a user.

According to various embodiments of the invention, the reference walking speed may be part of the above reference model of the pedestrian, or part of a separate model. The reference speed may be determined in different manners. For example, the user may input manually into the system his/her reference speed, using a keyboard, a sensitive screen, voice recognition, dedicated keys or any input system available. The reference speed may be also determined during a training phase, for example by observing a speed range which is the most frequently used by the user, or specifically asking the user to walk it his/her preferred speed during a period of time, and observing the average speed of the user during said period of time. The reference speed may also be computed based on typical models, depending on one or more of age of the user, gender of the user, height of the user and weight or body mass index of the user.

The figure 7 displays an example of this selection: the graph 700 represents the ratio between the speed at null slope, and the preferred speed of the user, for 5 successive time steps. The horizontal axis 701 represents the successive time steps, from the first time step k-4 to the current time step k, while the vertical axis 702 represents the ratio between the speed at null slope, and a preferred walking speed of the user.

The points 710, 711, 712, 713 and 714 represents five successive values of the ratio, for the five successive time steps k-4 to k. In a number of embodiments of the invention, a polynomial fitting 720 is applied on these values, in order to avoid pace changes due to a single, inconsistent value. At each time step, the ratio can be compared to a number of thresholds, either before or after polynomial fitting, to perform a classification of the pace of the user. For example, the thresholds and pace classes below can be used:

- $0 < \text{ratio} \leq 0.90$ : Slow walking ;

- $0.90 < \text{ratio} \leq 1.40$ : Regular walking ;

- $1.40 < \text{ratio} \leq 2.40$ : Slow running ;

- $2.40 < \text{ratio}$ : Fast running.

In a number of embodiments of the invention, a specific Tobler's hiking function is calibrated for the user, for each pace class. This allows using, for each pace of the user, the most relevant Tobler's hiking function, and obtaining the most accurate results.

Figure 8 displays a flow chart of an example of a method of the invention.

The method 800 comprises of a first step 810 of using a first sensor, said first sensor being located within a housing carriable by a pedestrian, to obtain measured values of a first set of data representative of a speed of the pedestrian, or a derivative thereof.

The method 800 comprises a second step 820 of using a second sensor, said second sensor being located within a housing carriable by the pedestrian, to obtain measured values of a second set of data representative of an altitude of the pedestrian, or a derivative thereof.

The method 830 comprises a third step 830 of calculating estimated values of a state vector of the pedestrian comprising:

- a first element representative of the speed of the pedestrian, or a derivative thereof;
- a second element representative of the altitude of the pedestrian, or a derivative thereof;
- and a path slope;

calculating estimated values of a state vector of the pedestrian being based on said measured values of the first set of data, said measured values of the second set of data, and a model of the pedestrian motion comprising a relationship between at least a speed the pedestrian or a derivative thereof and a path slope or a derivative thereof.

All the embodiments discussed above are applicable to the method 800.

In addition of advantageously providing a good estimation of the speed, pace of the pedestrian, and a good estimation of the slope of the path the pedestrian is walking on, the invention can be used for additional purposes.

A number of embodiments of the invention rely on a calculation of a relative altitude of the pedestrian. It is for example the case of embodiments discussed below with the altitude pressure. It is also the case in embodiments wherein the second sensor 320a, 320b measures a variation of altitude, or a derivative thereof (for example if the second sensor 320a, 320b is an accelerometer, which measures the vertical acceleration of the pedestrian or using temperature measurements that are linked to variation of altitude but not only).

In some embodiments, the invention also allows calculating the absolute altitude, if a measurement of absolute altitude is available for at least one reference time step, by adding the relative altitude between the current time step and the reference time step to the absolute altitude measurement at one reference time step. The absolute altitude measurement at the reference time step may be obtained for instance by using signals received from GNSS satellites, or by manually entering the altitude at the reference point.

This allows providing the absolute altitude at each time step, even if absolute measurements of altitude are not always available. This could be useful for example for a hiker, which enters the absolute altitude at a reference point (for example, the starting point of the hike), and permanently knows his/her absolute altitude, without requiring running a GNSS application. In other embodiments, crowdsourcing data shared with other people may be used to determine an absolute altitude. Other techniques may also rely on ranging approaches for example with people or with beacons in the vicinity to determine an absolute altitude.

The invention also allows improving the start time of GNSS applications. GNSS applications usually start considering that the last known location is the current location of the user. This may lead to incorrect start assumptions of the GNSS application, if the user moved a lot when the GNSS application was switched off. The invention allows starting a GNSS application with an improved start location, by:

- Detecting if a GNSS application is ON or OFF;
- Receiving a position of the pedestrian from the GNSS application, whenever said GNSS application is ON;
- Storing a last position of the user received from the GNSS application, when said application is turned OFF;
- Estimating, whenever said GNSS application is OFF, a distance crossed by the user using the previously described technique;
- When said GNSS application is turned ON, calculating a circle containing the start position of the user, using said last position of the user, and said distance crossed by the user. A confidence level may be associated to the radius of this circle based on the FOM previously described. If a measurement of absolute altitude is available for at least one reference time step during which the GNSS application was ON, then the circle can be extended to a cylinder by taking into account the vertical distance crossed by the user.

Thus, when the GNSS application is restarted, a more accurate position is used to start the GNSS application. This is possible, if the state vector comprises a position of the user, which is modified at each time step.

In a number of prior art applications, a GNSS application is started based on the last known satellite-based position. In case of important displacement of the user since the last satellite-based position was known, the GNSS application can start by displaying a wrong location, for example by displaying the user in the wrong town. On the contrary, starting the GNSS application using a location provided by the invention allows displaying the user immediately at a correct location (which is read in the state vector of the invention, if it comprises the position of the user), if a method of the invention performed a characterization of the movement of the pedestrian in the interval when the GNSS application was OFF.

The examples described above are given as illustrations of embodiments of the invention. They do not in any way limit the scope of the invention, which is defined by the following claims.

**Claims**

1. A device (300a, 300b), comprising:

- a communication link to a first sensor (310a, 310b), said first sensor being located within a housing carriable by a pedestrian, configured to obtain measured values of a first set of data representative of a speed of the pedestrian, or a derivative thereof;
- a communication link to a second sensor (320a, 320b), said second sensor being located within a housing carriable by the pedestrian, configured to obtain measured values of a second set of data representative of an altitude of the pedestrian, or a derivative thereof;
- a processing logic (330a, 330b) configured to calculate estimated values of a state vector of the pedestrian comprising:

  o a first element representative of the speed of the pedestrian, or a derivative thereof;
  o a second element representative of the altitude of the pedestrian, or a derivative thereof;

o and a path slope;

said processing logic being configured to calculate estimated values of the state vector based on said measured values of the first set of data said measured values of the second set of data, and a model of the pedestrian motion comprising a relationship between at least a speed of the pedestrian or a derivative thereof and a path slope or a derivative thereof,
wherein a state transition model is expressed by a transition matrix:

$$\begin{bmatrix} v_k \\ \alpha_k \\ p_{a,k} \\ p_{s,k} \end{bmatrix} = \begin{bmatrix} 0 & f_1 & 0 & 0 \\ 0 & 1 & 0 & 0 \\ f_2 & f_3 & f_4 & f_5 \\ 0 & 0 & 0 & 1 \end{bmatrix} \begin{bmatrix} v_{k-1} \\ \alpha_{k-1} \\ p_{a,k-1} \\ p_{s,k-1} \end{bmatrix}$$

wherein the speed $v_k$ of a user at time step k is calculated based on the path slope at time step k-1, and the Tobler's hiking function:

$$v_k = K_{Tobler} * 6 * e^{-3.5*abs(tan(\alpha_{k-1})+0.05)} + w_{v,k}$$

$w_{v,k}$ is the process noise at time step k, related to the speed of the pedestrian,
wherein:

$$\alpha_k = \alpha_{k-1} + w_{\alpha,k}$$

$\alpha_k$ is the path slope at time step k,
$w_{\alpha,k}$ is the process noise at time step k, for the path slope,
wherein:

$$p_{a,k} = (p_{a,\ k-1} + p_{s,\ k-1}) * \left(1 - \frac{0.0065 * v_{k-1} * \Delta T * sin(\alpha_{k-1})}{T^0{}_k}\right)^{5.255} - p_{s,\ k-1} + w_{p_a,k}$$

$p_{a,k}$ is the variation at time step k of the pressure due to altitude,
$w_{p_a,k}$ is the process noise at time step k for the altitude pressure,
$T^0{}_k$ is a temperature measured at time step k,
$v_k * \Delta T * sin(\alpha_{k-1})$ provides an estimated variation of the altitude of the pedestrian,
wherein:

$$p_{s,k} = p_{s,k-1} + w_{p_s,k}$$

$p_{s,k}$ is the static pressure at time step k,
$w_{p_s,k}$ is the process noise at time step k, for the static pressure.

2. The device of claim 1, wherein the processing logic is configured to perform successive steps of calculation of the state vector, each step (k) comprising:

   - calculating predicted values of the state vector at step (k), based on predicted values at the output of one or more preceding steps (k-1, k-2...), and said model of the pedestrian;
   - modifying values of the state vector at step (k), in order to minimize a difference between observed values of the first and second elements, based on said first and second sets of data, and predicted values of the first and second element at step (k).

3. The device of claim 2, wherein:

   - the first set of data is associated with a first uncertainty value, based on a measurement precision of the first sensor;

- the second set of data is associated with a second uncertainty value, based on a measurement precision of the second sensor;

- the processing logic is configured to modify values of the state vector at step (k), in order to minimize the difference between observed and predicted values of the first and second elements at step (k) using said first uncertainty value, and said second uncertainty value.

4. The device of one of claims 2 or 3, wherein the processing logic comprises one or more of a Kalman filter, or extended Kalman filter, an unscented Kalman filter, a central difference Kalman filter, or a particle filter.

5. The device of one of claims 1 to 4, wherein the processing logic is configured to detect a change of the pace of the pedestrian.

6. The device of claim 5, wherein the processing logic is configured to detect said change of the pace of the pedestrian, based on a comparison between a speed of the pedestrian in the state vector, and a reference speed of the pedestrian.

7. The device of one of claims 5 or 6, dependent upon claim 2, wherein the processing logic is configured, at each time step, to:

- determine, if the user is performing one of walking or running;
- if the user is neither walking nor running, set the value of the first element representative of the speed of the pedestrian to a value representative of null speed;
- if the user is walking or running, and a path change is detected, calculating a predicted value of the first element at time step (k) based on values of the first element at one or more preceding steps (k-1, k-2, ...), and adjusting said relationship between the speed of the pedestrian and the path slope based on the values of said first element, and said path slope, at the output of one or more of step k, and successive steps (k+1, k+2, ...);
- if the user is walking or running, and no path change is detected, calculating a predicted value of the first element representative of the speed of the pedestrian at time step (k) based on values of path slope at one or more preceding steps (k-1, k-2, ...), and said relationship between the speed of the pedestrian and the path slope.

8. The device of one of claims 1 to 5, wherein said relationship between a speed the pedestrian and a path slope is one of a Tobler's hiking function or a Naismith's rule with or without Tranter, Aitken or Langmuir corrections.

9. The device of claim 8, wherein said one of a Tobler's hiking function or a Naismith's rule with or without Tranter, Aitken or Langmuir corrections is parameterized using one or more of an age of the pedestrian, a gender of the pedestrian, an height of the pedestrian, and a weight or a body mass index of the pedestrian.

10. The device of one of claims 8 to 9, wherein said Tobler's hiking function or a Naismith's rule with or without Tranter, Aitken or Langmuir corrections is parameterized by a pace of the pedestrian.

11. The device of one of claims 1 to 10, wherein the first sensor is a pedometer, and the first set of data is one of a step count or a step frequency.

12. The device of one of claims 1 to 11, wherein the processing logic is configured to continuously estimate components of a position and/or a speed of the pedestrian.

13. The device of claim 12, wherein the processing logic is configured to:

- detect if a GNSS application is ON or OFF;
- receive a position of the pedestrian from the GNSS application, whenever said GNSS application is ON;
- store a last position of the user received from the GNSS application, when said application is turned OFF;
- estimate, whenever said GNSS application is OFF, a distance crossed by the user;
- when said GNSS application is turned ON, calculate a start position of the user, using said last position of the user, and said distance crossed by the user.

14. The device of one of any preceding claims, configured to output one or more of a step count of the pedestrian, a speed of the pedestrian, a distance crossed by the pedestrian, an uphill/downhill elevation and a path slope.

**15.** A method (800) comprising:

- using (810) a first sensor, said first sensor being located within a housing carriable by a pedestrian, to obtain measured values of a first set of data representative of a speed of the pedestrian, or a derivative thereof;
- using (820) a second sensor, said second sensor being located within a housing carriable by the pedestrian, to obtain measured values of a second set of data representative of an altitude of the pedestrian, or a derivative thereof;
- calculating (830) estimated values of a state vector of the pedestrian comprising:

  ◦ a first element representative of the speed of the pedestrian, or a derivative thereof;
  ◦ a second element representative of the altitude of the pedestrian, or a derivative thereof;
  ◦ and a path slope;

wherein calculating estimated values of a state vector of the pedestrian is based on said measured values of the first set of data, said measured values of the second set of data, and a model of the pedestrian motion comprising a relationship between at least a speed of the pedestrian or a derivative thereof and a path slope or a derivative thereof,
wherein a state transition model is expressed by a transition matrix:

$$
\begin{bmatrix} v_k \\ \alpha_k \\ p_{a,k} \\ p_{s,k} \end{bmatrix} = \begin{bmatrix} 0 & f_1 & 0 & 0 \\ 0 & 1 & 0 & 0 \\ f_2 & f_3 & f_4 & f_5 \\ 0 & 0 & 0 & 1 \end{bmatrix} \begin{bmatrix} v_{k-1} \\ \alpha_{k-1} \\ p_{a,k-1} \\ p_{s,k-1} \end{bmatrix}
$$

wherein the speed $v_k$ of a user at time step k is calculated based on the path slope at time step k-1, and the Tobler's hiking function:

$$
v_k = K_{Tobler} * 6 * e^{-3.5*abs(tan(\alpha_{k-1})+0.05)} + w_{v,k}
$$

$w_{v,k}$ is the process noise at time step k, related to the speed of the pedestrian, wherein:

$$
\alpha_k = \alpha_{k-1} + w_{\alpha,k}
$$

$\alpha_k$ is the path slope at time step k,
$w_{\alpha,k}$ is the process noise at time step k, for the path slope,
wherein:

$$
p_{a,k} = (p_{a,\ k-1} + p_{s,\ k-1}) * \left(1 - \frac{0.0065 * v_{k-1} * \Delta T * sin(\alpha_{k-1})}{T^0{}_k}\right)^{5.255} - p_{s,\ k-1} + w_{p_a,k}
$$

$p_{a,k}$ is the variation at time step k of the pressure due to altitude,
$w_{p_a,k}$ is the process noise at time step k for the altitude pressure,
$T^0{}_k$ is a temperature measured at time step k,
$v_k * \Delta T * sin(\alpha_{k-1})$ provides an estimated variation of the altitude of the pedestrian,
wherein:

$$
p_{s,k} = p_{s,k-1} + w_{p_s,k}
$$

$p_{s,k}$ is the static pressure at time step k,
$w_{p_s,k}$ is the process noise at time step k, for the static pressure.

**16.** A computer program product, stored on a non-transient computer readable medium, comprising computer code instructions configured to:

- obtain measured values from a first sensor, said first sensor being located within a housing carriable by a pedestrian, to obtain measured values of a first set of data representative of a speed of the pedestrian, or a derivative thereof;
- obtain measured values from a second sensor, said second sensor being located within a housing carriable by a pedestrian, to obtain measured values of a second set of data representative of an altitude of the pedestrian, or a derivative thereof;
- calculate estimated values of a state vector of the pedestrian comprising:

  ◦ a first element representative of the speed of the pedestrian, or a derivative thereof;
  ◦ a second element representative of the altitude of the pedestrian, or a derivative thereof;
  ◦ and a path slope;

wherein said computed code instructions are configured to calculate estimated values of a state vector of the pedestrian based on said measured values of the first set of data, said measured values of the second set of data, and a model of the pedestrian motion comprising at least a relationship between a speed of the pedestrian or a derivative thereof and a path slope or a derivative thereof,
wherein a state transition model is expressed by a transition matrix:

$$
\begin{bmatrix} v_k \\ \alpha_k \\ p_{a,k} \\ p_{s,k} \end{bmatrix} = \begin{bmatrix} 0 & f_1 & 0 & 0 \\ 0 & 1 & 0 & 0 \\ f_2 & f_3 & f_4 & f_5 \\ 0 & 0 & 0 & 1 \end{bmatrix} \begin{bmatrix} v_{k-1} \\ \alpha_{k-1} \\ p_{a,k-1} \\ p_{s,k-1} \end{bmatrix}
$$

wherein the speed $v_k$ of a user at time step k is calculated based on the path slope at time step k-1, and the Tobler's hiking function:

$$
v_k = K_{Tobler} * 6 * e^{-3.5*abs(tan(\alpha_{k-1})+0.05)} + w_{v,k}
$$

$w_{v,k}$ is the process noise at time step k, related to the speed of the pedestrian,
wherein:

$$
\alpha_k = \alpha_{k-1} + w_{\alpha,k}
$$

$\alpha_k$ is the path slope at time step k,
$w_{\alpha,k}$ is the process noise at time step k, for the path slope,
wherein:

$$
p_{a,k} = (p_{a,\ k-1} + p_{s,\ k-1}) * \left(1 - \frac{0.0065 * v_{k-1} * \Delta T * sin(\alpha_{k-1})}{T^0_k}\right)^{5.255} - p_{s,\ k-1} + w_{p_a,k}
$$

$p_{a,k}$ is the variation at time step k of the pressure due to altitude,
$w_{pa,k}$ is the process noise at time step k for the altitude pressure,
$T^0_k$ is a temperature measured at time step k,
$v_k * \Delta T * sin(\alpha_{k-1})$ provides an estimated variation of the altitude of the pedestrian,
wherein:

$$
p_{s,k} = p_{s,k-1} + w_{p_s,k}
$$

$p_{s,k}$ is the static pressure at time step k,
$w_{p_s,k}$ is the process noise at time step k, for the static pressure.

**Patentansprüche**

1. Vorrichtung (300a, 300b), umfassend:

   - eine Kommunikationsverbindung zu einem ersten Sensor (310a, 310b), wobei sich der erste Sensor in einem Gehäuse befindet, das von einem Fußgänger getragen werden kann, und so konfiguriert ist, dass er Messwerte eines ersten Satzes von Daten erhält, die für eine Geschwindigkeit des Fußgängers oder eine Ableitung davon repräsentativ sind;
   - eine Kommunikationsverbindung zu einem zweiten Sensor (320a, 320b), wobei sich der zweite Sensor in einem von dem Fußgänger getragenen Gehäuse befindet und so konfiguriert ist, dass er Messwerte eines zweiten Datensatzes erhält, der eine Höhe des Fußgängers oder eine Ableitung davon darstellt;
   - eine Verarbeitungslogik (330a, 330b), die so konfiguriert ist, dass sie geschätzte Werte eines Zustandsvektors des Fußgängers berechnet, umfassend:

     o ein erstes Element, das für die Geschwindigkeit des Fußgängers steht, oder eine Ableitung davon;
     o ein zweites Element, das die Höhe des Fußgängers angibt, oder eine Ableitung davon;
     o und eine Neigung des Weges;

   die Verarbeitungslogik so konfiguriert ist, dass sie geschätzte Werte des Zustandsvektors auf der Grundlage der gemessenen Werte des ersten Datensatzes, der gemessenen Werte des zweiten Datensatzes und eines Modells der Fußgängerbewegung berechnet, umfassend eine Beziehung zwischen mindestens einer Geschwindigkeit des Fußgängers oder einer Ableitung davon und einer Neigung des Weges oder einer Ableitung davon, wobei ein Zustandsübergangsmodell durch eine Übergangsmatrix ausgedrückt wird:

$$\begin{bmatrix} v_k \\ \alpha_k \\ p_{a,k} \\ p_{s,k} \end{bmatrix} = \begin{bmatrix} 0 & f_1 & 0 & 0 \\ 0 & 1 & 0 & 0 \\ f_2 & f_3 & f_4 & f_5 \\ 0 & 0 & 0 & 1 \end{bmatrix} \begin{bmatrix} v_{k-1} \\ \alpha_{k-1} \\ p_{a,k-1} \\ p_{s,k-1} \end{bmatrix}$$

   wobei die Geschwindigkeit $v_k$ eines Benutzers im Zeitschritt k auf der Grundlage der Neigung des Weges im Zeitschritt k-1 und der Toblerschen Wanderfunktion berechnet wird:

$$v_k = K_{Tobler} * 6 * e^{-3.5*abs(tan(\alpha_{k-1})+0.05)} + w_{v,k}$$

   $w_{v,k}$ ist das Prozessrauschen zum Zeitpunkt k, bezogen auf die Geschwindigkeit des Fußgängers, wobei:

$$\alpha_k = \alpha_{k-1} + w_{\alpha,k}$$

   $a_k$ die Neigung des Weges im Zeitschritt k ist,
   $w_{a,k}$ das Prozessrauschen zum Zeitschritt k, für die Neigung des Weges ist, wobei:

$$p_{a,k} = (p_{a,\,k-1} + p_{s,\,k-1}) * \left(1 - \frac{0.0065 * v_{k-1} * \Delta T * sin(\alpha_{k-1})}{T^0_k}\right)^{5.255} - p_{s,\,k-1} + w_{p_{a,k}}$$

   $p_{a,k}$ die höhenbedingte Veränderung des Drucks im Zeitschritt k ist,
   $w_{pa,k}$ das Prozessrauschen zum Zeitschritt k für den Höhendruck ist,
   $T^0_k$ eine im Zeitschritt k gemessene Temperatur ist,
   $v_k * \Delta T * sin(a_k-1)$ eine geschätzte Variation der Höhe des Fußgängers liefert, wobei:

$$p_{s,k} = p_{s,k-1} + w_{p_s,k}$$

$p_{s,k}$ der statische Druck im Zeitschritt k ist,

$w_{ps,k}$ das Prozessrauschen zum Zeitschritt k für den statischen Druck ist.

2. Vorrichtung nach Anspruch 1, wobei die Verarbeitungslogik so konfiguriert ist, dass sie aufeinander folgende Schritte zur Berechnung des Zustandsvektors durchführt, jeder Schritt (k) umfassend:

   - Berechnen der vorhergesagten Werte des Zustandsvektors im Schritt (k), basierend auf den vorhergesagten Werten am Ausgang eines oder mehrerer vorstehender Schritte (k-1, k-2...) und dem Modell des Fußgängers;
   - Modifizieren von Werten des Zustandsvektors im Schritt (k), um eine Differenz zwischen beobachteten Werten des ersten und zweiten Elements, auf der Grundlage des ersten und zweiten Datensatzes, und vorhergesagten Werten des ersten und zweiten Elements im Schritt (k) zu minimieren.

3. Vorrichtung nach Anspruch 2, wobei:

   - der erste Datensatz mit einem ersten Unsicherheitswert verknüpft ist, basierend auf einer Messgenauigkeit des ersten Sensors;
   - der zweite Datensatz mit einem zweiten Unsicherheitswert verknüpft ist, basierend auf einer Messgenauigkeit des zweiten Sensors;
   - die Verarbeitungslogik so konfiguriert ist, dass sie die Werte des Zustandsvektors im Schritt (k) modifiziert, um die Differenz zwischen beobachteten und vorhergesagten Werten des ersten und zweiten Elements im Schritt (k) unter Verwendung des ersten Unsicherheitswerts und des zweiten Unsicherheitswerts zu minimieren.

4. Vorrichtung nach einem der Ansprüche 2 oder 3, wobei die Verarbeitungslogik einen oder mehrere der folgenden Filter umfasst: Kalman-Filter, erweiterter Kalman-Filter, geruchloser Kalman-Filter, zentraler Differenz-Kalman-Filter oder Partikelfilter.

5. Vorrichtung nach einem der Ansprüche 1 bis 4, wobei die Verarbeitungslogik so konfiguriert ist, dass sie eine Änderung der Geschwindigkeit des Fußgängers erkennt.

6. Vorrichtung nach Anspruch 5, wobei die Verarbeitungslogik so konfiguriert ist, dass sie die Änderung der Geschwindigkeit des Fußgängers auf der Grundlage eines Vergleichs zwischen einer Geschwindigkeit des Fußgängers im Zustandsvektor und einer Referenzgeschwindigkeit des Fußgängers erkennt.

7. Vorrichtung nach einem der Ansprüche 5 oder 6, abhängig von Anspruch 2, wobei die Verarbeitungslogik so konfiguriert ist, dass sie bei jedem Zeitschritt:

   - feststellet, ob der Benutzer gerade geht oder läuft;
   - wenn der Benutzer weder geht noch läuft, den Wert des ersten Elements, das für die Geschwindigkeit des Fußgängers steht, auf einen Wert setzt, der für die Geschwindigkeit Null steht;
   - wenn der Benutzer geht oder läuft und eine Wegänderung erkannt wird, einen vorhergesagten Wert des ersten Elements beim Zeitschritt (k) auf der Grundlage von Werten des ersten Elements bei einem oder mehreren vorstehenden Schritten (k-1, k-2,...), und Anpassen der Beziehung zwischen der Geschwindigkeit des Fußgängers und der Neigung des Weges am Ausgang eines oder mehrerer Schritte (k-1, k-2,...);
   - wenn der Benutzer geht oder läuft und keine Wegänderung erkannt wird, einen vorhergesagten Wert des ersten Elements berechnet, der die Geschwindigkeit des Fußgängers bei Zeitschritt (k) repräsentiert, basierend auf Werten der Neigung des Weges bei einem oder mehreren vorstehenden Schritten (k-1, k-2,...), und der Beziehung zwischen der Geschwindigkeit des Fußgängers und der Neigung des Weges.

8. Vorrichtung nach einem der Ansprüche 1 bis 5, wobei die Beziehung zwischen der Geschwindigkeit des Fußgängers und der Neigung des Weges eine Toblersche Wanderfunktion oder eine Naismithsche Regel mit oder ohne Tranter-, Aitken- oder Langmuir-Korrekturen ist.

9. Vorrichtung nach Anspruch 8, wobei die Toblersche Wanderfunktion oder die Naismithsche Regel mit oder ohne Tranter-, Aitken- oder Langmuir-Korrekturen unter Verwendung eines oder mehrerer der folgenden Parameter parametrisiert wird: Alter des Fußgängers, Geschlecht des Fußgängers, Größe des Fußgängers und Gewicht oder Body-Mass-Index des Fußgängers.

10. Vorrichtung nach einem der Ansprüche 8 bis 9, wobei die Toblersche Wanderfunktion oder eine Naismithsche Regel mit oder ohne Tranter-, Aitken- oder Langmuir-Korrekturen durch das Tempo des Fußgängers parametrisiert wird.

11. Vorrichtung nach einem der Ansprüche 1 bis 10, wobei der erste Sensor ein Schrittzähler ist und der erste Datensatz entweder eine Schrittanzahl oder eine Schrittfrequenz ist.

12. Vorrichtung nach einem der Ansprüche 1 bis 11, wobei die Verarbeitungslogik so konfiguriert ist, dass sie kontinuierlich Komponenten einer Position und/oder einer Geschwindigkeit des Fußgängers schätzt.

13. Die Vorrichtung nach Anspruch 12, wobei die Verarbeitungslogik so konfiguriert ist, dass sie:

   - erkennt, ob eine GNSS-Anwendung EIN oder AUS ist;
   - eine Position des Fußgängers von der GNSS-Anwendung empfangt, wenn die GNSS-Anwendung eingeschaltet ist;
   - eine von der GNSS-Anwendung empfangene letzte Position des Benutzers speichert, wenn die Anwendung ausgeschaltet wird;
   - schätzt, immer wenn die GNSS-Anwendung ausgeschaltet ist, eine vom Benutzer zurückgelegte Entfernung;
   - wenn die GNSS-Anwendung eingeschaltet ist, eine Startposition des Benutzers unter Verwendung der letzten Position des Benutzers und der vom Benutzer zurückgelegten Entfernung berechnet.

14. Vorrichtung nach einem der vorstehenden Ansprüche, die so konfiguriert ist, dass sie einen oder mehrere der folgenden Werte ausgibt: eine Schrittzahl des Fußgängers, eine Geschwindigkeit des Fußgängers, eine vom Fußgänger zurückgelegte Strecke, eine Steigung/ein Gefälle und eine Neigung des Weges.

15. Verfahren (800), umfassend:

   - Verwenden (810) eines ersten Sensors, wobei sich der erste Sensor in einem von einem Fußgänger getragenen Gehäuse befindet, um Messwerte eines ersten Datensatzes zu erhalten, der eine Geschwindigkeit des Fußgängers oder eine Ableitung davon darstellt;
   - Verwenden (820) eines zweiten Sensors, wobei sich der zweite Sensor in einem von dem Fußgänger getragenen Gehäuse befindet, um Messwerte eines zweiten Datensatzes zu erhalten, der eine Höhe des Fußgängers oder eine Ableitung davon darstellt;
   - Berechnen (830) von geschätzten Werten eines Zustandsvektors des Fußgängers, umfassend:

      o ein erstes Element, das für die Geschwindigkeit des Fußgängers steht, oder eine Ableitung davon;
      o ein zweites Element, das die Höhe des Fußgängers angibt, oder eine Ableitung davon;
      o und eine Neigung des Weges;

   wobei die Berechnung der geschätzten Werte eines Zustandsvektors des Fußgängers auf den gemessenen Werten des ersten Datensatzes, den gemessenen Werten des zweiten Datensatzes und einem Modell der Fußgängerbewegung basiert, umfassend eine Beziehung zwischen mindestens einer Geschwindigkeit des Fußgängers oder einer Ableitung davon und einer Neigung des Weges oder einer Ableitung davon,
   wobei ein Zustandsübergangsmodell durch eine Übergangsmatrix ausgedrückt wird:

$$
\begin{bmatrix} v_k \\ \alpha_k \\ p_{a,k} \\ p_{s,k} \end{bmatrix} = \begin{bmatrix} 0 & f_1 & 0 & 0 \\ 0 & 1 & 0 & 0 \\ f_2 & f_3 & f_4 & f_5 \\ 0 & 0 & 0 & 1 \end{bmatrix} \begin{bmatrix} v_{k-1} \\ \alpha_{k-1} \\ p_{a,k-1} \\ p_{s,k-1} \end{bmatrix}
$$

   wobei die Geschwindigkeit $v_k$ eines Benutzers im Zeitschritt k auf der Grundlage der Neigung des Weges im Zeitschritt k-1 und der Toblerschen Wanderfunktion berechnet wird:

$$
v_k = K_{Tobler} * 6 * e^{-3.5*abs(tan(\alpha_{k-1})+0.05)} + w_{v,k}
$$

$w_{v,k}$ ist das Prozessrauschen zum Zeitpunkt k, bezogen auf die Geschwindigkeit des Fußgängers, wobei:

$$\alpha_k = \alpha_{k-1} + w_{\alpha,k}$$

$a_k$ die Neigung des Weges im Zeitschritt k ist,
$w_{a,k}$ das Prozessrauschen zum Zeitschritt k, für die Neigung des Weges ist,
wobei:

$$p_{a,k} = (p_{a,\ k-1} + p_{s,\ k-1}) * \left(1 - \frac{0.0065 * v_{k-1} * \Delta T * sin(\alpha_{k-1})}{T^0_k}\right)^{5.255} - p_{s,\ k-1} + w_{p_a,k}$$

$p_{a,k}$ die höhenbedingte Veränderung des Drucks im Zeitschritt k ist,
$w_{pa,k}$ das Prozessrauschen zum Zeitschritt k für den Höhendruck ist,
$T^0_k$ eine im Zeitschritt k gemessene Temperatur ist,
$v_k * \Delta T * sin(a_k-1)$ eine geschätzte Variation der Höhe des Fußgängers liefert,
wobei:

$$p_{s,k} = p_{s,k-1} + w_{p_s,k}$$

$p_{s,k}$ der statische Druck im Zeitschritt k ist,
$w_{ps,k}$ das Prozessrauschen zum Zeitschritt k für den statischen Druck ist.

16. Computerprogrammprodukt, das auf einem nicht flüchtigen computerlesbaren Medium gespeichert ist und Computercode-Befehle umfassend, die konfiguriert sind, um:

- Messwerte eines ersten Sensors zu erhalten, wobei sich der erste Sensor in einem von einem Fußgänger getragenen Gehäuse befindet, um Messwerte eines ersten Datensatzes zu erhalten, der eine Geschwindigkeit des Fußgängers oder eine Ableitung davon darstellt;
- Messwerte eines ersten Sensors zu erhalten, wobei sich der zweite Sensor in einem von einem Fußgänger getragenen Gehäuse befindet, um Messwerte eines zweiten Datensatzes zu erhalten, der eine Höhe des Fußgängers oder eine Ableitung davon darstellt;
- geschätzte Werte eines Zustandsvektors des Fußgängers berechnen, umfassend:

  o ein erstes Element, das für die Geschwindigkeit des Fußgängers steht, oder eine Ableitung davon;
  o ein zweites Element, das die Höhe des Fußgängers angibt, oder eine Ableitung davon;
  o und eine Neigung des Weges;

wobei die berechneten Codebefehle so konfiguriert sind, dass sie geschätzte Werte eines Zustandsvektors des Fußgängers auf der Grundlage der gemessenen Werte des ersten Datensatzes, der gemessenen Werte des zweiten Datensatzes und eines Modells der Fußgängerbewegung berechnen, umfassend mindestens eine Beziehung zwischen einer Geschwindigkeit des Fußgängers oder einer Ableitung davon und einer Neigung des Weges oder einer Ableitung davon,
wobei ein Zustandsübergangsmodell durch eine Übergangsmatrix ausgedrückt wird:

$$\begin{bmatrix} v_k \\ \alpha_k \\ p_{a,k} \\ p_{s,k} \end{bmatrix} = \begin{bmatrix} 0 & f_1 & 0 & 0 \\ 0 & 1 & 0 & 0 \\ f_2 & f_3 & f_4 & f_5 \\ 0 & 0 & 0 & 1 \end{bmatrix} \begin{bmatrix} v_{k-1} \\ \alpha_{k-1} \\ p_{a,k-1} \\ p_{s,k-1} \end{bmatrix}$$

wobei die Geschwindigkeit $v_k$ eines Benutzers im Zeitschritt k auf der Grundlage der Neigung des Weges im Zeitschritt k-1 und der Toblerschen Wanderfunktion berechnet wird:

$$v_k = K_{Tobler} * 6 * e^{-3.5*abs(tan(\alpha_{k-1})+0.05)} + w_{v,k}$$

$w_{v,k}$ ist das Prozessrauschen zum Zeitpunkt k, bezogen auf die Geschwindigkeit des Fußgängers, wobei:

$$\alpha_k = \alpha_{k-1} + w_{\alpha,k}$$

$a_k$ die Neigung des Weges im Zeitschritt k ist,
$w_{a,k}$ das Prozessrauschen zum Zeitschritt k, für die Neigung des Weges ist,
wobei:

$$p_{a,k} = (p_{a,\ k-1} + p_{s,\ k-1}) * \left(1 - \frac{0.0065 * v_{k-1} * \Delta T * sin(\alpha_{k-1})}{T^0_k}\right)^{5.255} - p_{s,\ k-1} + w_{p_a,k}$$

$p_{a,k}$ die höhenbedingte Veränderung des Drucks im Zeitschritt k ist,
$w_{pa,k}$ das Prozessrauschen zum Zeitschritt k für den Höhendruck ist,
$T^0_k$ eine im Zeitschritt k gemessene Temperatur ist,
$v_k * \Delta T * sin(a_k-1)$ eine geschätzte Variation der Höhe des Fußgängers liefert,
wobei:

$$p_{s,k} = p_{s,k-1} + w_{p_s,k}$$

$p_{s,k}$ der statische Druck im Zeitschritt k ist,
$w_{ps,k}$ das Prozessrauschen zum Zeitschritt k für den statischen Druck ist.

## Revendications

1. Dispositif (300a, 300b), comprenant :

- une liaison de communication avec un premier capteur (310a, 310b), ledit premier capteur étant situé à l'intérieur d'un boîtier pouvant être porté par un piéton, configuré pour obtenir des valeurs mesurées d'un premier ensemble de données représentatives d'une vitesse du piéton, ou d'une dérivée de celle-ci ;
- une liaison de communication avec un deuxième capteur (320a, 320b), ledit deuxième capteur étant situé à l'intérieur d'un boîtier pouvant être porté par le piéton, configuré pour obtenir des valeurs mesurées d'un deuxième ensemble de données représentatives d'une altitude du piéton, ou d'une dérivée de celle-ci ;
- une logique de traitement (330a, 330b) configurée pour calculer des valeurs estimées d'un vecteur d'état du piéton comprenant :

  ∘ un premier élément représentatif de la vitesse du piéton, ou d'une dérivée de celle-ci ;
  ∘ un deuxième élément représentatif de l'altitude du piéton, ou d'une dérivée de celle-ci ;
  ∘ et une pente de chemin ;

ladite logique de traitement étant configurée pour calculer des valeurs estimées du vecteur d'état sur la base desdites valeurs mesurées du premier ensemble de données, desdites valeurs mesurées du deuxième ensemble de données, et d'un modèle du mouvement du piéton comprenant une relation entre au moins une vitesse du piéton ou une dérivée de celle-ci et une pente de chemin ou une dérivée de celle-ci,
dans lequel un modèle de transition d'état est exprimé par une matrice de transition :

$$\begin{bmatrix} v_\kappa \\ \alpha_\kappa \\ p_{\alpha,\kappa} \\ p_{s,\kappa} \end{bmatrix} = \begin{bmatrix} 0 & f_1 & 0 & 0 \\ 0 & 1 & 0 & 0 \\ f_2 & f_3 & f_4 & f_5 \\ 0 & 0 & 0 & 1 \end{bmatrix} \begin{bmatrix} v_{k-1} \\ \alpha_{k-1} \\ p_{a,k-1} \\ p_{s,k-1} \end{bmatrix}$$

dans laquelle la vitesse $v_k$ d'un utilisateur à un pas de temps k est calculée sur la base de la pente de chemin à un pas de temps k-1, et de la fonction de randonnée de Tobler :

$$v_k = k_{\text{Tobler}} * 6 * e^{-3,5*abs(\tan(\alpha_{k-1})+0,05)} + \mathcal{W}_{v,k}$$

$W_{v,k}$ est le bruit de processus au pas de temps k, lié à la vitesse du piéton,
dans laquelle :

$$\alpha_k = \alpha_{k-1} + \mathcal{W}_{\alpha,k}$$

$\alpha_k$ est la pente de chemin au pas de temps k,
$W_{\alpha,k}$ est le bruit de processus au pas de temps k, pour la pente de chemin,

dans laquelle :

$$p_{a,k} = \left(p_{a,\ k-1} + p_{s,\ k-1}\right) * \left(1 - \frac{0,0065 * v_{k-1} * \Delta T * \sin(\alpha_{k-1})}{T_K^0}\right)^{5,255} - p_{s,\ k-1} + w_{pa,k}$$

$p_{\alpha,k}$ est la variation au pas de temps k de la pression due à l'altitude,
$W_{p\alpha,k}$ est le bruit de processus au pas de temps k pour la pression d'altitude,
$T^0_k$ est une température mesurée au pas de temps k,
$v_k * \Delta T * \sin(\alpha_{k-1})$ fournit une variation estimée de l'altitude du piéton,

dans laquelle :

$$p_{s,k} = p_{s,k-1} + \mathcal{W}_{ps,k}$$

$p_{s,k}$ est la pression statique au pas de temps k,
$W_{ps,k}$ est le bruit de processus au pas de temps k, pour la pression statique.

2. Dispositif de la revendication 1, dans lequel la logique de traitement est configurée pour effectuer des pas successifs de calcul du vecteur d'état, chaque pas (k) comprenant :

   - le calcul de valeurs prédites du vecteur d'état au pas (k), sur la base des valeurs prédites à la sortie d'un ou de plusieurs pas précédents (k-1, k-2...), et dudit modèle du piéton ;
   - la modification de valeurs du vecteur d'état au pas (k), afin de minimiser une différence entre des valeurs observées des premier et deuxième éléments, sur la base desdits premier et deuxième ensembles de données, et des valeurs prédites des premier et deuxième éléments au pas (k).

3. Dispositif de la revendication 2, dans lequel :

   - le premier ensemble de données est associé à une première valeur d'incertitude, basée sur une précision de mesure du premier capteur ;
   - le deuxième ensemble de données est associé à une deuxième valeur d'incertitude, basée sur une précision de mesure du deuxième capteur ;
   - la logique de traitement est configurée pour modifier des valeurs du vecteur d'état au pas (k), afin de minimiser la différence entre des valeurs observées et prédites des premier et deuxième éléments au pas (k) en utilisant ladite première valeur d'incertitude, et ladite deuxième valeur d'incertitude.

4. Dispositif de l'une des revendications 2 ou 3, dans lequel la logique de traitement comprend un ou plusieurs parmi un filtre de Kalman, ou un filtre de Kalman étendu, un filtre de Kalman sans parfum, un filtre de Kalman à différence centrale, ou un filtre à particules.

**5.** Dispositif de l'une des revendications 1 à 4, dans lequel la logique de traitement est configurée pour détecter un changement du rythme du piéton.

**6.** Dispositif de la revendication 5, dans lequel la logique de traitement est configurée pour détecter ledit changement du rythme du piéton, sur la base d'une comparaison entre une vitesse du piéton dans le vecteur d'état, et une vitesse de référence du piéton.

**7.** Dispositif de l'une des revendications 5 ou 6, dépendant de la revendication 2, dans lequel la logique de traitement est configurée, à chaque pas de temps, pour :

- déterminer, si l'utilisateur effectue une marche ou une course ;
- si l'utilisateur ne marche ni ne court, fixer la valeur du premier élément représentatif de la vitesse du piéton à une valeur représentative d'une vitesse nulle ;
- si l'utilisateur marche ou court, et un changement de chemin est détecté, calculer une valeur prédite du premier élément au pas de temps (k) sur la base de valeurs du premier élément à un ou plusieurs pas précédents (k-1, k-2, ...), et ajuster ladite relation entre la vitesse du piéton et la pente de chemin sur la base des valeurs dudit premier élément, et de ladite pente de chemin, à la sortie d'un ou de plusieurs du pas k, et des pas successifs (k+1, k+2, ...) ;
- si l'utilisateur marche ou court, et aucun changement de chemin n'est détecté, calculer une valeur prédite du premier élément représentatif de la vitesse du piéton au pas de temps (k) sur la base de valeurs de la pente de chemin à un ou plusieurs pas précédents (k-1, k-2, ...), et de ladite relation entre la vitesse du piéton et la pente de chemin.

**8.** Dispositif de l'une des revendications 1 à 5, dans lequel ladite relation entre une vitesse du piéton et une pente de chemin est l'une d'une fonction de randonnée de Tobler ou d'une règle de Naismith avec ou sans corrections de Tranter, Aitken ou Langmuir.

**9.** Dispositif de la revendication 8, dans lequel ladite une d'une fonction de randonnée de Tobler ou d'une règle de Naismith avec ou sans corrections de Tranter, Aitken ou Langmuir est paramétrée en utilisant un ou plusieurs parmi un âge du piéton, un genre du piéton, une taille du piéton, et un poids ou un indice de masse corporelle du piéton.

**10.** Dispositif de l'une des revendications 8 et 9, dans lequel ladite fonction de randonnée de Tobler ou une règle de Naismith avec ou sans corrections de Tranter, Aitken ou Langmuir est paramétrée par un rythme du piéton.

**11.** Dispositif de l'une des revendications 1 à 10, dans lequel le premier capteur est un podomètre, et le premier ensemble de données est l'un d'un nombre de pas ou d'une fréquence de pas.

**12.** Dispositif de l'une des revendications 1 à 11, dans lequel la logique de traitement est configurée pour estimer en continu des composantes d'une position et/ou d'une vitesse du piéton.

**13.** Dispositif de la revendication 12, dans lequel la logique de traitement est configurée pour :

- détecter si une application GNSS est activée ou désactivée ;
- recevoir une position du piéton de l'application GNSS, chaque fois que ladite application GNSS est activée ;
- stocker une dernière position de l'utilisateur reçue de l'application GNSS, lorsque ladite application est désactivée ;
- estimer, chaque fois que ladite application GNSS est désactivée, la distance parcourue par l'utilisateur ;
- lorsque ladite application GNSS est activée, calculer une position de départ de l'utilisateur, en utilisant ladite dernière position de l'utilisateur, et ladite distance parcourue par l'utilisateur.

**14.** Dispositif de l'une quelconque des revendications précédentes, configuré pour délivrer en sortie un ou plusieurs parmi un nombre de pas du piéton, une vitesse du piéton, une distance parcourue par le piéton, une élévation en montée/descente et une pente de chemin.

**15.** Procédé (800) comprenant :

- l'utilisation (810) d'un premier capteur, ledit premier capteur étant situé à l'intérieur d'un boîtier pouvant être porté par un piéton, pour obtenir des valeurs mesurées d'un premier ensemble de données représentatives d'une vitesse du piéton, ou d'une dérivée de celle-ci ;
- l'utilisation (820) d'un deuxième capteur, ledit deuxième capteur étant situé à l'intérieur d'un boîtier pouvant être porté par le piéton, pour obtenir des valeurs mesurées d'un deuxième ensemble de données représentatives d'une altitude du piéton, ou d'une dérivée de celle-ci ;
- le calcul (830) de valeurs estimées d'un vecteur d'état du piéton comprenant :

  ◦ un premier élément représentatif de la vitesse du piéton, ou d'une dérivée de celle-ci ;
  ◦ un deuxième élément représentatif de l'altitude du piéton, ou d'une dérivée de celle-ci ;
  ◦ et une pente de chemin ;

dans lequel le calcul de valeurs estimées d'un vecteur d'état du piéton est basé sur lesdites valeurs mesurées du premier ensemble de données, lesdites valeurs mesurées du deuxième ensemble de données, et un modèle du mouvement du piéton comprenant une relation entre au moins une vitesse du piéton ou une dérivée de celle-ci et une pente de chemin ou une dérivée de celle-ci,
dans lequel un modèle de transition d'état est exprimé par une matrice de transition :

$$\begin{bmatrix} v_\kappa \\ \alpha_\kappa \\ p_{\alpha,\kappa} \\ p_{s,\kappa} \end{bmatrix} = \begin{bmatrix} 0 & f_1 & 0 & 0 \\ 0 & 1 & 0 & 0 \\ f_2 & f_3 & f_4 & f_5 \\ 0 & 0 & 0 & 1 \end{bmatrix} \begin{bmatrix} v_{k-1} \\ \alpha_{k-1} \\ p_{a,k-1} \\ p_{s,k-1} \end{bmatrix}$$

dans laquelle la vitesse $v_k$ d'un utilisateur au pas de temps k est calculée sur la base de la pente de chemin au pas de temps k-1, et de la fonction de randonnée de Tobler :

$$v_k = k_{\text{Tobler}} * 6 * e^{-3,5*abs(\tan(\alpha_{k-1})+0,05)} + \mathcal{W}_{v,k}$$

$W_{v,k}$ est le bruit de processus au pas de temps k, lié à la vitesse du piéton,
dans laquelle :

$$\alpha_k = \alpha_{k-1} + \mathcal{W}_{\alpha,k}$$

$\alpha_k$ est la pente de chemin au pas de temps k,
$W_{\alpha,k}$ est le bruit de processus au pas de temps k, pour la pente de chemin,

dans laquelle :

$$p_{a,k} = \left(p_{a,\ k-1} + p_{s,\ k-1}\right) * \left(1 - \frac{0,0065 * v_{k-1} * \Delta T * \sin(\alpha_{k-1})}{T_K^0}\right)^{5,255} - p_{s,\ k-1} + w_{pa,k}$$

$p_{\alpha,k}$ est la variation au pas de temps k de la pression due à l'altitude,
$W_{p\alpha,k}$ est le bruit de processus au pas de temps k pour la pression d'altitude,
$T^0_k$ est une température mesurée au pas de temps k,
$v_k * \Delta T * \sin(\alpha_{k-1})$ fournit une variation estimée de l'altitude du piéton,

dans laquelle :

$$p_{s,k} = p_{s,k-1} + \mathcal{W}_{ps,k}$$

$p_{s,k}$ est la pression statique au pas de temps k,
Wps, k est le bruit de processus au pas de temps k, pour la pression statique.

**16.** Produit de programme informatique, stocké sur un support non transitoire lisible par ordinateur, comprenant des instructions de code informatique configurées pour :

- obtenir des valeurs mesurées à partir d'un premier capteur, ledit premier capteur étant situé à l'intérieur d'un boîtier pouvant être porté par un piéton, pour obtenir des valeurs mesurées d'un premier ensemble de données représentatives d'une vitesse du piéton, ou d'une dérivée de celle-ci ;
- obtenir des valeurs mesurées à partir d'un deuxième capteur, ledit deuxième capteur étant situé à l'intérieur d'un boîtier pouvant être porté par un piéton, pour obtenir des valeurs mesurées d'un deuxième ensemble de données représentatives d'une altitude du piéton, ou d'une dérivée de celle-ci ;
- calculer des valeurs estimées d'un vecteur d'état du piéton comprenant :

◦ un premier élément représentatif de la vitesse du piéton, ou d'une dérivée de celle-ci;
◦ un deuxième élément représentatif de l'altitude du piéton, ou d'une dérivée de celle-ci ;
◦ et une pente de chemin ;

dans lequel lesdites instructions de code informatique sont configurées pour calculer des valeurs estimées d'un vecteur d'état du piéton sur la base desdites valeurs mesurées du premier ensemble de données, desdites valeurs mesurées du deuxième ensemble de données, et d'un modèle du mouvement du piéton comprenant au moins une relation entre une vitesse du piéton ou une dérivée de celle-ci et une pente de chemin ou une dérivée de celle-ci,

dans lequel un modèle de transition d'état est exprimé par une matrice de transition :

$$\begin{bmatrix} v_{\kappa} \\ \alpha_{\kappa} \\ p_{\alpha,\kappa} \\ p_{s,\kappa} \end{bmatrix} = \begin{bmatrix} 0 & f_1 & 0 & 0 \\ 0 & 1 & 0 & 0 \\ f_2 & f_3 & f_4 & f_5 \\ 0 & 0 & 0 & 1 \end{bmatrix} \begin{bmatrix} v_{k-1} \\ \alpha_{k-1} \\ p_{a,k-1} \\ p_{s,k-1} \end{bmatrix}$$

dans laquelle la vitesse $v_k$ d'un utilisateur au pas de temps k est calculée sur la base de la pente de chemin au pas de temps k-1, et de la fonction de randonnée de Tobler :

$$v_k = k_{\text{Tobler}} * 6 * e^{-3,5*abs(\tan(\alpha_{k-1})+0,05)} + \mathcal{W}_{v,k}$$

$W_{v,k}$ est le bruit de processus au pas de temps k, lié à la vitesse du piéton,
dans laquelle :

$$\alpha_k = \alpha_{k-1} + \mathcal{W}_{\alpha,k}$$

$\alpha_k$ est la pente de chemin au pas de temps k,
$W_{\alpha,k}$ est le bruit de processus au pas de temps k, pour la pente de chemin,

dans laquelle :

$$p_{a,k} = \left(p_{a,\ k-1} + p_{s,\ k-1}\right) * \left(1 - \frac{0,0065 * v_{k-1} * \Delta T * \sin(\alpha_{k-1})}{T_K^0}\right)^{5,255} - p_{s,\ k-1} + w_{pa,k}$$

$p_{\alpha,k}$ est la variation au pas de temps k de la pression due à l'altitude,
$W_{p\alpha,k}$ est le bruit de processus au pas de temps k pour la pression d'altitude,
$T^0_k$ est une température mesurée au pas de temps k,
$v_k * \Delta T * \sin(\alpha_{k-1})$ fournit une variation estimée de l'altitude du piéton,

dans laquelle :

$$p_{s,k} = p_{s,k\text{-}1} + \mathcal{W}_{ps,k}$$

ps, k est la pression statique au pas de temps k,
Wps, k est le bruit de processus au pas de temps k, pour la pression statique.

FIG.1a

FIG.1b

FIG.2

320a

This.stop()
00100111 ...

330a

310a

300a

## FIG.3a

321b

322b

300b

This.stop()
00100111
...

330b

320b

310b

## FIG.3b

FIG.4

FIG.5

621

Input Personal
Data

620

Initialization

630

Pace
Change
detected ?

YES

NO

631

Idle, stairs
or
elevators?

YES

NO

632

Convergene
timer over?

YES

NO

611

612

EKF Regular Mode

EKF Transient Mode

EKF Special
processing

610

Re-
initialization
trigger?

YES

NO

633

YES

EKF
divergence
detected?

634

NO

600

Next Time step

640

FIG.6

FIG.7

FIG.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1253404 A

**Non-patent literature cited in the description**

- **TOBLER, W.** Three presentations on geographical analysis and modeling. *NCGIA,* 1993
- **KENNEDY, P.** *Wilderness Rules,* 1998, http://www.gillean.demon.co.uk/Naismith/Naismith.htm
- **AITKEN, ROBERT.** Wilderness Areas in Scotland. University of Aberdeen, 1977
- Mountaincraft and Leadership. **LANGMUIR, ERIC.** A Handbook for Mountaineers and Hillwalking Leaders in the British Isles. 2013, 38-39